# EUROPÄISCHE PATENTSCHRIFT

(11) **EP 2 605 632 B1**
(45) Veröffentlichungstag und Bekanntmachung des Hinweises auf die Patenterteilung: **20.08.2014**
(21) Anmeldenummer: 12756148.8
(22) Anmeldetag: 28.08.2012
(51) Int. Cl.: A01B 49/02, A01B 73/00, A01B 73/04

(54) **GEZOGENE LANDWIRTSCHAFTLICHE MASCHINE MIT PACKEREINHEIT UND VERFAHREN ZUR HANDHABUNG EINER SOLCHEN MASCHINE**
TOWED AGRICULTURAL MACHINE WITH PACKER UNIT
MACHINE AGRICOLE TRACTÉE DOTÉE D'UN ROULEAU

(30) Priorität: 30.08.2011 EP 11179295
(43) Veröffentlichungstag der Anmeldung: 26.06.2013
(73) Patentinhaber: Horsch Maschinen GmbH, 92421 Schwandorf (DE)
(72) Erfinder: HORSCH, Michael, 92421 Schwandorf (DE)
(74) Vertreter: Benninger, Johannes
(86) Internationale Anmeldenummer: PCT/EP2012/066671
(87) Internationale Veröffentlichungsnummer: WO 2013/030183

(56) Entgegenhaltungen:
- WO-A1-91/03922
- WO-A1-97/40660
- DE-A1- 4 306 145
- DE-B4- 10 084 623
- GB-A- 2 246 938

## Beschreibung

Die vorliegende Erfindung betrifft eine gezogene landwirtschaftliche Maschine zur Bodenbearbeitung und/oder zum Ausbringen von Saatgut, die ein Fahrwerk, Bodenbearbeitungswerkzeuge und eine Packereinheit umfasst, die mit dem Fahrwerk gekoppelt ist und mit diesem eine bauliche und/oder funktionelle Einheit bildet. Die Erfindung betrifft zudem ein Verfahren zur Handhabung, nämlich zur Umrüstung und/oder Funktionsänderung einer solchen gezogenen landwirtschaftlichen Maschine mit den Merkmalen des unabhängigen Verfahrensanspruchs.

In der Landwirtschaft werden die unterschiedlichsten Bodenbearbeitungsgeräte eingesetzt. Eine häufig verwendete Bauart umfasst einen angehängten Rahmen mit eigenem Fahrwerk und großer Arbeitsbreite, der mittels einer Zugmaschine über den Acker gezogen wird. Solche Bodenbearbeitungsgeräte können bspw. mit Lockerungs- und/oder Schneidwerkzeugen, bspw. als sog. Kurzscheiben- oder Zinkeneggen o. dgl. ausgebildet sein. Derartige Bodenbearbeitungsgeräte können zudem mit Säkombinationen und/oder Düngerstreueinrichtungen ausgestattet sein.

Zum Transport können bspw. Teile des Rahmens um horizontale Längsachsen verschwenkt werden, so dass die Baubreite der Maschine auf ein für die Straßenfahrt zulässiges Maß reduziert werden kann. Bei gezogenen landwirtschaftlichen Geräten zur Bodenbearbeitung oder Saat mit integrierten Packelementen gibt es verschiedene Varianten von Fahrwerken für diese Geräte, die für eine Straßenfahrt oder auch teilweise für den Wendevorgang im Feld notwendig sind. So gibt es Geräte, bei denen das Packerelement so ausgeführt ist, dass dieses Packerelement gleichzeitig auch als Fahrwerkselement genutzt werden kann. I.d.R. sind solche Arten von Packerelementen aus Reifen gebildet, die sich gleichermaßen für eine Feldfahrt wie auch für einen Straßentransport eignen.

Sofern jedoch die Packerelemente aus Stahl oder anderen, nicht für die Straßenfahrt tauglichen Materialien bestehen, ist ein zusätzliches Fahrwerk notwendig, meistens bestehend aus einer Achse mit Rädern, versehen mit einer Aushubvorrichtung, um das Gerät von der Arbeitsstellung in die Transportstellung oder umgekehrt zu bringen. Solche Fahrwerke und die Packer können dabei in unterschiedlichster Weise innerhalb der Gerätekombinationen angeordnet sein. So können bspw. Fahrwerke in der Gerätemitte, am Ende des Geräts, vor oder hinter den Packern angeordnet sein. In aller Regel sind die Fahrwerke und die Packer funktional voneinander getrennt und bedürfen jeweils eigener Rahmenbauteile und Aushubvorrichtungen. Diese herkömmlichen Anordnungs- und Bauarten bedürfen eines hohen technischen Aufwandes und benötigen zudem relativ viel Bauraum. So bauen bekannte gezogene landwirtschaftliche Geräte mit voneinander getrennten, eigenen Fahrwerken und Packerelementen i.d.R. in Längsrichtung sehr lang durch die Aneinanderreihung der verschiedenen Elemente und den Bauraum, der bspw. für die vertikale Bewegung der Fahrwerke oder auch Packerelemente notwendig ist.

Gleichzeitig werden Geräte immer größer und damit schwerer, wodurch es immer aufwändiger wird, bei diesen langen und schweren Geräten die Stabilität, beispielsweise der Rahmenkonstruktionen zu gewährleisten. Weiterhin sind Geräte mit zunehmender Länge und Größe fahrtechnisch immer instabiler als vergleichbar kürzere und kleinere Geräte. Dabei stellt die zunehmende seitliche Kippgefahr im Straßenverkehr eine zu bewältigende Herausforderung dar.

Die WO 2005/015974 A2 offenbart eine gezogene landwirtschaftliche Bodenbearbeitungsmaschine, die ein höhenverstellbares Fahrwerk mit einer Hubeinrichtung aufweist, so dass hintere Stützräder für eine Straßenfahrt aus einer ausgehobenen Ruhelage nach unten verschwenkt und in eine Betriebslage gebracht werden können, in der sie das Gerät tragen. Getrennt davon können scheibenförmige Bodenbearbeitungswerkzeuge mitsamt ihren Tragrahmenelementen aus einer nach unten geschwenkten Betriebslage für die Feldfahrt in eine nach oben verschwenkte Ruhelage für die Straßenfahrt gebracht werden. Die Schwenkmechanismen für die Tragräder und für die Bodenbearbeitungswerkzeuge sind unabhängig voneinander betätigbar.

Die US 7 073 604 B1 offenbart eine gezogene landwirtschaftliche Bodenbearbeitungsmaschine mit sehr großer Arbeitsbreite, die eine Mehrzahl von höhenverstellbaren vorderen Stützrädern sowie zwei Paare von höhenverstellbaren hinteren Stützrädern aufweist. Ein Tragrahmen der Maschine umfasst mehrere gelenkig miteinander verbundene Abschnitte, die bei der Überfahrt von unterschiedlich profilierten Bodenoberflächen gegeneinander verschwenkt werden können. Unmittelbar vor den hinteren Stützrädern sind scheibenförmige Packerräder angeordnet, die sich über die gesamte Arbeitsbreite der Bodenbearbeitungsmaschine erstrecken.

Aus der DE 199 08 241 A1 geht eine gezogene landwirtschaftliche Gerätekombination mit einem Rahmen hervor, an welchem mehrere als Scheibeneggenelemente ausgebildeten Bodenbearbeitungsgeräte angeordnet sind. An einer Heckseite des Rahmens ist ein Fahrwerk mit Laufrädern über schwenkbare Träger aufgehängt. Die um eine horizontale Querachse schwenkbaren Träger sind an einem Querträger des Rahmens angelenkt. Mittels doppeltwirkender Hydraulikzylinder können die Schwenkträger mit den Laufrädern abgesenkt oder angehoben werden. Zum Überführen der Gerätekombination in eine Transportstellung werden das Fahrwerk und die Bodenwalze angehoben, wonach Sicherungselemente deaktiviert werden. Anschließend können die Schwenkträger mit den Laufrädern abgesenkt werden, wodurch die Gerätekombination in eine Transportposition überführt wird. Der Überführungsvorgang zwischen einer Transportstellung mit aktiviertem Fahrwerk und einer Arbeitsstellung mit angehobenem Fahrwerk erfordert einerseits einen hohen konstruktiven Aufwand, ohne dass dadurch ein vollautomatisierter Wechsel zwischen den Betriebszuständen ermöglicht ist.

Die WO 97/40660 A offenbart eine weitere gezogene landwirtschaftliche Bodenbearbeitungsmaschine, die mehrere Scheibeneggenelemente, nachgeordnete Packerwalzen sowie ein heckseitiges Fahrwerk aufweist. Die Packerwalzen sowie die in Fahrtrichtung dahinter angeordneten Fahrwerksräder befinden sich an einem gemeinsamen Heckträger, der um eine horizontale Schwenkachse, die sich heckseitig am Rahmen der Maschine befindet, mittels eines Stellzylinders verschwenkt werden kann. Wird der oberhalb der Schwenkachse liegende doppeltwirkende Hydraulikzylinder eingezogen, so wird der Heckträger nach oben verschwenkt, so dass die Räder den Bodenkontakt verlieren und nur die Packerwalze am Ackerboden aufliegt. Wird der Zylinder dagegen ausgefahren, senken sich die heckseitigen Räder nach unten und heben die gesamte Maschine soweit vom Boden, dass alle Bodenbearbeitungswerkzeuge aus dem berührenden Kontakt mit dem Untergrund kommen, so dass die Maschine für eine Straßenfahrt vorbereitet ist. Bei dieser Maschine bilden das Fahrwerk und die Packereinheit eine weitgehend starr miteinander verbundene Baueinheit, die nur als komplette Einheit an einem Hebelarm verschwenkt werden kann. Eine Relativbewegung der Fahrwerksräder zur Packereinheit ist nicht möglich.

Eine weitere landwirtschaftliche Maschine mit den Merkmalen des Oberbegriffs des Anspruchs 1 ist aus der DE 43 06 145 bekannt.

Ein Ziel der vorliegenden Erfindung besteht darin, eine gezogene landwirtschaftliche Maschine zur Verfügung zu stellen, bei der eine Baueinheit aus einem Fahrwerk und einer Packeranordnung derart gestaltet ist, dass ein Wechsel zwischen Betriebszuständen für eine Feldfahrt und eine Straßenfahrt schnell und einfach durchführbar ist. Unabhängig davon soll eine einfache und effektive Höheneinstellung von Bodenbearbeitungswerkzeugen ermöglicht sein. Nicht zuletzt soll die Maschine derart ausgebildet sein, dass auch große Geräte sehr kompakt bleiben können und dadurch die Fahrstabilität gewährleistet bleibt. Darüber hinaus soll eine optimale Stabilität der Rahmenkonstruktionen mit möglichst geringem Aufwand und Gewicht realisierbar sein.

Dieses Ziel der Erfindung wird mit den Gegenständen der unabhängigen Ansprüche 1 und 8 erreicht. Merkmale vorteilhafter Weiterbildungen der Erfindung ergeben sich aus den jeweiligen abhängigen Ansprüchen. So schlägt die Erfindung zur Erreichung des genannten Ziels eine Anordnung und eine funktionale Verbindung eines Fahrwerks einer gezogenen landwirtschaftlichen Maschine mit einer Packereinheit bzw. einem Packerelement vor, die äußerst kompakt ist und dadurch die Baulänge bisher üblicher Anordnungen deutlich reduzieren kann. Gleichzeitig wird durch die erfindungsgemäße Fahrwerks-Packer-Kombination die Anzahl der Bauteile stark reduziert, was sich äußerst positiv auf die Kosten, auf die erzielbare Fahrstabilität und auf die gesamte mechanische und fahrdynamische Stabilität der Maschine in ihrer Arbeitsposition auswirkt.

Die Erfindung schlägt eine gezogene landwirtschaftliche Maschine zur Bodenbearbeitung und/oder zum Ausbringen von Saatgut und/oder anderem granulatartigem oder flüssigem Gut wie bspw. Dünger vor. Diese Maschine umfasst als wesentliche Funktionselemente ein Fahrwerk, Bodenbearbeitungswerkzeuge und eine Packereinheit, die mit dem Fahrwerk gekoppelt ist und mit diesem eine bauliche und/oder funktionale Einheit bildet. Normalerweise umfasst die Maschine darüber hinaus auch einen Tragrahmen, der die genannten Bauteile trägt bzw. miteinander verbindet und der über eine Zugdeichsel oder eine andere geeignete Verbindung mit einem landwirtschaftlichen Zugfahrzeug verbunden sein kann. Die Maschine weist die Besonderheit auf, dass in einer ersten Betriebslage das Fahrwerk in eine aktive Lage für eine Straßenfahrt gebracht ist und die Packereinheit außerhalb eines Eingriffsbereichs mit dem Boden gebracht ist, und dass in einer zweiten Betriebslage das Fahrwerk oder zumindest Teile des Fahrwerks in eine inaktive Lage außerhalb eines Kontaktbereichs mit dem Boden gebracht ist/sind und die Packereinheit sich in einem aktiven Zustand im Eingriffsbereichs mit dem Boden befindet. D.h., die beiden Funktionselemente Fahrwerk und Packereinheit sind derart miteinander gekoppelt bzw. baulich und/oder funktional miteinander verbunden, dass sie im Zusammenhang mit der Umschaltung zwischen Feldfahrt und Straßenfahrt miteinander bzw. gleichzeitig zwischen ihren Betriebslagen bzw. Endlagen bewegt oder aktiviert bzw. deaktiviert werden.

Das Fahrwerk und die Packereinheit bilden idealerweise eine äußerst kompakte, feste Funktionseinheit mit einer gemeinsamen oder zumindest funktional und/oder baulich zusammenhängenden Schwenk- oder Bewegungsachse, um die das Fahrwerk und die Packereinheit zwischen ihrer ersten Betriebslage für eine Straßenfahrt und ihrer zweiten Betriebslage für eine Feldfahrt verschwenkbar sind. Die Funktionselemente Packereinheit und Fahrwerk bilden so eine feste bzw. starre Einheit und können bspw. für sich an einer -ggf. gemeinsamen - Achse drehbar gelagert sein, und zwar derart, dass durch Verschwenken dieser Funktionseinheit bzw. dieses Moduls um diese Achse entweder das Fahrwerk oder das Packerelement sich auf dem Untergrund abstützt. So kann die kombinierte Funktionseinheit aus Fahrwerk und Packereinheit bzw. dieses Modul bspw. eine horizontale, an einem Geräterahmen gelagerte und quer zur Fahrtrichtung ausgerichtete Schwenkachse sowie daran angeordnete Auslegerarme für das Fahrwerk bzw. die Packereinheit aufweisen, wobei die bauliche Einheit aus Schwenkachse und Auslegerarmen für sich starr ausgebildet ist. Wenn in diesem Zusammenhang von horizontalen Schwenkachsen für die Funktionseinheit oder einem Modul die Rede ist, so ist damit nicht zwingend eine körperlich vorhandene Achse oder drehbare Welle o. dgl. gemeint. Die Achse kann auch eine virtuelle Schwenkachse sein, um welche die kombinierte Funktionseinheit aus Fahrwerk und Packereinheit beweglich angeordnet sein kann.

Zweckmäßigerweise sind den ersten und zweiten Betriebslagen der erfindungsgemäßen Maschine jeweils verriegelbare Endlagen des Schwenkbereichs der Schwenkachse mit daran angeordneten Auslegerarmen für das Fahrwerk und die Packereinheit zugeordnet. Die Definition der solcherart verriegelbaren Endlagen schließt jedoch eine Höhenverstellbarkeit und/oder eine federnde und/oder dämpfende Nachgiebigkeit der Fahrwerksräder und/oder Packerelemente nicht aus. Zu diesem Zweck können die Funktionsbauteile jeweils geeignete Feder- und/oder Dämpferelemente aufweisen, die sich sinnvollerweise am Aufbaurahmen bzw. Tragrahmen der Maschine abstützen. Eine Ausführungsvariante der erfindungsgemäßen Maschine sieht vor, dass die kombinierte Funktionseinheit aus Fahrwerk und Packereinheit höhenverstellbar zum Werkzeugrahmen des Gerätes angebracht ist.

Wahlweise kann die kombinierte Funktionseinheit aus Fahrwerk und Packereinheit an einem hinteren Ende des Gerätes angeordnet sein. Alternativ hierzu kann die kombinierte Funktionseinheit aus Fahrwerk und Packereinheit in Nähe des hinteren Endes des Gerätes angeordnet sein, wobei in Fahrtrichtung davor und/oder dahinter weitere Werkzeuge angeordnet sein können. Auch kann die Packereinheit verschiedene Packersysteme wie bspw. Einzelpacker und/oder Doppelpacker umfassen. Zudem kann die Maschine neben der kombinierten Funktionseinheit aus Fahrwerk und Packereinheit verschiedene Werkzeugkombinationen umfassen, die mit der Funktionseinheit kombiniert sind. Dies können bspw. zinken- und/oder scheibenartige Werkzeuge oder auch Säeinheiten beliebiger Bauart sein. Grundsätzlich sind vielfältige Kombinationen verschiedenster Elemente denkbar.

Die kombinierte Funktionseinheit aus Fahrwerk und Packereinheit - im vorliegenden Zusammenhang auch als Modul bezeichnet - kann auch ungefähr in der Mitte des Gerätes angeordnet sein, wobei das Fahrwerk in der ersten Betriebslage zu Transportzwecken dienen kann.

Es sei an dieser Stelle darauf hingewiesen, dass bei der Verwendung des Begriffes Fahrwerk, das gemeinsam mit der Packereinheit um die Schwenkachse verschwenkbar angeordnet sein kann, in der Regel der Teil des Fahrwerks gemeint ist, der nahe bei den Packerelementen angeordnet ist, d.h. normalerweise die hinteren Stützräder. Die für die Tiefeneinstellung unterstützend verwendbaren vorderen Stützräder werden dabei nicht mit verschwenkt, sondern können i.d.R. unabhängig von den hinteren Stützrädern in der Höhe verstellt werden. Wenn also im Zusammenhang der vorliegenden Anmeldung - Beschreibung und Ansprüche - von der funktional und/oder baulich gekoppelten Einheit von Fahrwerk und Packereinheit oder auch einem Modul die Rede ist, so ist damit gleichermaßen eine Funktionseinheit von Packereinheit und damit baulich und funktional gekoppelten hinteren Stützrändern gemeint und umfasst.

Es sei weiter darauf hingewiesen, dass sich die erfindungsgemäße Packer-Fahrwerks-Funktionseinheit - auch als Modul bezeichnet - nicht über die gesamte Arbeitsbreite der Maschine erstrecken muss, sondern sich normalerweise nur über deren mittleren Bereich erstreckt. Optionale seitliche, anklappbare Rahmenausleger weisen keine Schwenkachsen und auch kein Fahrwerk auf. Da solche erfindungsgemäßen Bodenbearbeitungsmaschinen normalerweise sehr große Arbeitsbreiten aufweisen, können beidseitig des Maschinenrahmens jeweils klappbare Auslegerabschnitte vorgesehen sein, welche die Gesamtarbeitsbreite der Maschine deutlich vergrößern können. Die um horizontale Schwenkachsen, die parallel zur Fahrtrichtung angeordnet sind, klappbaren Auslegerabschnitte sind für eine Straßenfahrt vorzugsweise nach oben geschwenkt, so dass die Maschinenbreite auf das notwendige Maß für die Straßenfahrt reduziert ist. Für die Feldfahrt können diese Auslegerabschnitte nach unten geschwenkt werden, so dass die entsprechenden Rahmenabschnitte mit den daran angeordneten Werkzeugen wie bspw. Zinken, Scheiben und heckseitigen Packereinheiten aktiv sind. Für die Auslegerabschnitte sind keine separaten Stützräder erforderlich. Ebenso können für diese Abschnitte die klappbaren Einheiten aus Packereinheiten und hinteren Stützrädern entfallen.

Die in den verschiedensten Ausführungsvarianten erläuterte landwirtschaftliche Maschine kann zur Bodenbearbeitung, zur Ausbringung von Saatgut oder für andere landwirtschaftliche Zwecke eingesetzt werden, bspw. auch zum Ausbringen von Dünger etc. Die erfindungsgemäße landwirtschaftliche Maschine weist einen Maschinenrahmen mit daran angeordneten Bodenbearbeitungswerkzeugen auf, die bspw. durch Scheibeneggen, Grubber, Zerkleinerungswerkzeugen, Packerwerkzeugen o. dgl. gebildet sein können. Der Maschinenrahmen kann grundsätzlich beliebig ausgebildet sein, weist jedoch in aller Regel einen Leiterrahmen aus Stahlrohren und/oder profilierten Stahlträgern auf, an dessen Frontseite eine starre oder höhenverstellbare Zugdeichsel oder eine andere geeignete Kuppeleinrichtung zur Verbindung mit einem landwirtschaftlichen Zugfahrzeug angeordnet ist. An der Unterseite des starren oder in Teilen beweglichen und/oder schwenkbaren Maschinenrahmens sind die Bodenbearbeitungswerkzeuge angeordnet, die wahlweise gegenüber dem Maschinenrahmen höhen- oder winkelverstellbar sein können. Wahlweise können die Bodenbearbeitungswerkzeuge auch auswechselbar am Rahmen befestigt sein, so dass mehrere Gruppen unterschiedlicher Bodenbearbeitungswerkzeuge in unterschiedlicher Weise miteinander kombiniert werden können. Weiterhin umfasst die erfindungsgemäße Maschine eine Packereinheit, die in Fahrtrichtung der Maschine den Bodenbearbeitungswerkzeugen nachgeordnet und schwenkbeweglich und höhenverstellbar am Maschinenrahmen angelenkt ist. Dieser Packereinheit ist ein Fahrwerk zugeordnet, das mindestens zwei in einem Heckbereich der Maschine angeordnete hintere Stützräder aufweist, die variabel und gemeinsam mit der Packereinheit verstellt werden können, um die landwirtschaftliche Maschine sowohl für die Feldfahrt auf dem Acker als auch für die Straßenfahrt schnell und mit wenigen Verstelleingriffen vorzubereiten und einzurichten.

Eine Besonderheit der schwenkbeweglich und höhenverstellbar am Maschinenrahmen gelagerten bzw. angelenkten Packereinheit liegt darin, dass sie ein schwenkbeweglich zwischen zwei Endlagen gelagertes, schwenk- bzw. verstellbares Modul aufweist, welches das Fahrwerk und/oder die hinteren Stützräder sowie die eigentlichen Packerwerkzeuge trägt bzw. umfasst. D.h. an dem genannten Modul bzw. an der genannten Funktionseinheit sind sowohl das Fahrwerk und/oder die hinteren Stützräder als auch die - in der Regel durch zahlreiche rotierende Scheiben, Walzen o. dgl. gebildeten - Packerwerkzeuge angeordnet. Das Modul oder die Funktionseinheit mit dem Fahrwerk und den Packerwerkzeugen ist in einer Weise zwischen zwei Endlagen verstellbar bzw. einstellbar, dass in den jeweiligen Endlagen entweder das Fahrwerk oder die Packerwerkzeuge zum Boden weisen und/oder sich im Eingriff oder Kontakt mit dem Boden befinden. D.h., wenn in einer der beiden Endlagen des Moduls oder der Funktionseinheit das Fahrwerk und/oder die hinteren Stützräder aufgesetzt sind und zum Boden weisen, stützt sich die Maschine auf den Rädern oder dem Fahrwerk ab und kann auf der Straße bewegt werden, während sich die Packerwerkzeuge außerhalb des Eingriffs mit der Straße bzw. dem Untergrund befinden. Dagegen ist die andere Endlage dadurch charakterisiert, dass die Packerwerkzeuge zum Boden weisen und sich im Eingriff mit dem Ackerboden befinden, während die Räder oder das Fahrwerk angehoben oder in einer Weise verschwenkt sind, dass sie sich nicht auf dem Boden abstützen können. Um dies zu erreichen und die beiden Endlagen des Moduls oder der Funktionseinheit einstellen und realisieren zu können, sind der Packereinheit und dem daran gelagerten Modul jeweils separate Verstelleinrichtungen zur unabhängig voneinander steuerbaren Verstellung und/oder Schwenkbeweglichkeit der Packereinheit sowie dem daran gelagerten Modul bzw. der daran gelagerten Funktionseinheit zugeordnet. Diese wenigstens zwei separaten und getrennt voneinander ansteuerbaren Verstelleinrichtungen können bspw. durch Hydraulik- oder Pneumatikzylinder gebildet sein, die sich vom Zugfahrzeug steuern und mit Steuerdruck beaufschlagen lassen, um die gewünschten Einstellungen an der Maschine vornehmen zu können.

Bei einer besonders bevorzugten Variante der erfindungsgemäßen landwirtschaftlichen Maschine umfasst die am Maschinenrahmen angelenkte bzw. gelagerte Packereinheit einen schwenkbeweglichen und höhenverstellbaren Packerrahmen, der über wenigstens eine erste Verstelleinrichtung mit dem Maschinenrahmen gekoppelt ist. Der Packerrahmen ist dabei in einer Weise ausgebildet, dass die wenigstens eine erste Verstelleinrichtung die am Rahmen angelenkte und um eine ungefähr horizontale Schwenkachse bewegliche Packereinheit als Ganzes absenkt oder anhebt. Auf diese Weise kann eine Höhenverstellbarkeit der Maschine realisiert werden. Durch Verstellen der dafür vorgesehenen Verstelleinrichtung und durch Anheben oder Absenken des Packerrahmens der Packereinheit werden die Bodenbearbeitungswerkzeuge abgesenkt oder angehoben, was insbesondere für die Feldfahrt bei in Eingriff mit dem Ackerboden befindlichen Bodenbearbeitungswerkzeugen von Vorteil ist, um je nach eingesetzten Werkzeugen und je nach Bodenverhältnissen und/oder gewünschter Bearbeitungstiefe eine einfache und schnelle Höhenverstellbarkeit des Maschinenrahmens und damit der Bodenbearbeitungswerkzeuge realisieren zu können. Es sind auch andere alternative Varianten der Verbindung zwischen dem heckseitig am Maschinenrahmen angelenkten höhenverstellbaren Packerrahmen und der Maschine denkbar, bspw. eine Linearführung zur Höhenverstellung oder eine geeignete Hebelumlenkung o. dgl.

Die mittels der ersten Verstelleinrichtung bzw. der zwei oder mehr ersten Verstelleinrichtungen realisierbare Höhenverstellbarkeit der Packereinheit durch Anheben oder Absenken des Packerrahmens kann ebenso für die Straßenfahrt von Vorteil sein, wenn die Packerwerkzeuge nach oben verschwenkt sind und sich die Packereinheit mit den heckseitigen Rädern bzw. dem Fahrwerk auf dem Boden abstützt, da hierbei durch Absenken der heckseitigen Packereinheit ein vorteilhafter Abstand der Bodenbearbeitungswerkzeuge von der Straßenoberfläche ermöglicht ist, wodurch zuverlässig vermieden werden kann, dass die Bodenbearbeitungswerkzeuge bei schlechten Straßenverhältnissen und sehr unebener Fahrbahn in Bodenkontakt kommen und zu Schäden an der Straße und/oder den Werkzeugen führen können.

Optionale vordere Stützräder können wahlweise an einer Vorderseite, vorzugsweise beidseitig der Zugdeichsel oder Anhängevorrichtung angeordnet sein. Diese optionalen vorderen Stützräder sind vorzugsweise ebenfalls in der Höhe einstellbar und können insbesondere für eine Straßenfahrt abgesenkt werden, so dass es sich um eine angehängte Maschine handelt, die gezogen werden kann und sich über ein vollständiges Fahrwerk mit mindestens vier Rädern selbst trägt. Bei fehlenden vorderen Stützrädern handelt es sich i.d.R. um eine aufgesattelte Maschine, die zumindest für die Straßenfahrt, wenn sich die Bodenbearbeitungswerkzeuge nicht am Boden abstützen dürfen, einer geeigneten Aufsattelvorrichtung des ziehenden landwirtschaftlichen Zugfahrzeugs bedarf.

Das beweglich an der Packereinheit angeordnete und einen Teil der Packereinheit bildende Modul kann bspw. einen schwenkbeweglich am Packerrahmen angeordenten Modulrahmen umfassen, an dem die Packerwerkzeuge und das Fahrwerk und/oder die hinteren Stützräder aufgehängt bzw. gelagert sind. So können die hinteren Stützräder bzw. das Fahrwerk, die Packerwerkzeuge und die Schwenklagerung des Moduls in einer Seitenansicht ein Dreieck bilden, wobei ein Modulrahmen bspw. in Seitenansicht eine V-Form oder eine gabelartige Form aufweisen kann, an dessen Gabelenden jeweils die Lagerungen der Räder bzw. der - i.d.R. rotierenden - Packerwerkzeuge angeordnet sind, während die Spitze der V-Kontur die Lagerung des Modulrahmens am Packerrahmen bildet, die um eine horizontale Schwenkachse gegenüber dem Packerrahmen verstellt und verschwenkt werden kann. Auf diese Weise sind die Endlagen des schwenkbeweglich am Packerrahmen angeordneten Moduls durch eine Verschwenkung um eine ungefähr horizontal liegende Schwenkachse definiert. Zudem sind diese Endlagen durch Verstellbewegungen wenigstens einer am Packerrahmen angelenkten zweiten Verstelleinrichtungen ansteuerbar. Diese zweite Verstelleinrichtung dreht das Modul bzw. den Modulrahmen zwischen seinen Endlagen. Da sich die Packerwerkzeuge und die Räder bzw. das Fahrwerk an gegenüber liegenden oder zumindest entfernten Seiten des Rahmens befinden, sorgt das Verschwenken für die gewünschte Umrüstung der Maschine für die Feldfahrt oder die Straßenfahrt.

In der beschriebenen Weise können in einer ersten Betriebslage das Fahrwerk und/oder die heckseitig angeordneten hinteren Stützräder in eine aktive Lage für eine Straßenfahrt gebracht sein, während die Packereinheit außerhalb eines Eingriffsbereichs mit dem Boden gebracht ist. Gleichermaßen können in der zweiten Betriebslage zumindest Teile des Fahrwerks in eine inaktive Lage außerhalb eines Kontaktbereichs mit dem Boden gebracht sein, während sich die Packereinheit in einem aktiven Zustand im Eingriffsbereich mit dem Boden befindet. Die Höhenverstellung der Maschine und/oder der Bodenbearbeitungswerkzeuge erfolgt mittels einer Verschwenkung des Packerrahmens mit der daran angeordneten funktionalen Einheit aus Packereinheit und Fahrwerk und/oder hinteren Stützrädern um die erste horizontale Querachse sowie durch einen Wechsel zwischen der ersten Betriebslage für die Straßenfahrt und der zweiten Betriebslage für eine Feldfahrt mittels einer Verschwenkung der heckseitig am Packerrahmen angeordneten funktionalen Einheit aus Packereinheit und Fahrwerk und/oder hinteren Stützrädern um einer zweite horizontale Querachse.

Weiterhin umfasst die vorliegende Erfindung ein Verfahren zur Umrüstung und/oder Funktionsänderung der zuvor in verschiedenen Ausführungsvarianten beschriebenen gezogenen landwirtschaftlichen Maschine. Diese Maschine kann mittels des nachfolgend erläuterten Verfahrens zwischen einem ersten Betriebsmodus zur Bodenbearbeitung und/oder zum Ausbringen von Saatgut und einem zweiten Betriebsmodus für eine Straßenfahrt umgerüstet bzw. in ihrer Funktion geändert werden. Wie oben erwähnt, umfasst die Maschine einen Maschinenrahmen mit daran angeordneten Bodenbearbeitungswerkzeugen sowie eine in Fahrtrichtung der Maschine den Bodenbearbeitungswerkzeugen nachgeordnete, schwenkbeweglich und höhenverstellbar am Maschinenrahmen angelenkte Packereinheit. Dieser Packereinheit ist ein Fahrwerk zugeordnet, das mindestens zwei in einem Heckbereich der Maschine angeordnete hintere Stützräder aufweist. Weiterhin ist die Packereinheit schwenkbeweglich und höhenverstellbar am Maschinenrahmen gelagert und weist ein schwenkbeweglich zwischen zwei Endlagen gelagertes Modul mit daran angeordnetem Fahrwerk und/oder hinteren Stützrädern sowie Packerwerkzeugen auf. In den jeweiligen Endlagen weist entweder das Fahrwerk oder die Packerwerkzeuge zum Boden bzw. befinden sich im Eingriff oder Kontakt mit dem Boden. Die Packereinheit kann mitsamt dem daran gelagerten Modul mittels einer ersten Verstelleinrichtung gegenüber dem Maschinenrahmen in der Höhe bzw. Winkelstellung verändert werden. Mittels einer zweiten Verstelleinrichtung kann das Modul zwischen seinen beiden Endlagen zur Straßenfahrt oder zur Feldfahrt verschwenkt oder umgeschaltet werden.

Zur Durchführung des erfindungsgemäßen Verfahrens kann die wenigstens eine erste Verstelleinrichtung die am Rahmen angelenkte und um eine ungefähr horizontale Schwenkachse bewegliche Packereinheit als Ganzes absenken oder anheben. Zudem definiert eine Verstellung oder Verschwenkung des schwenkbeweglich am Packerrahmen angeordneten Moduls um eine ungefähr horizontal liegende Schwenkachse seine Endlagen, wobei diese Endlagen durch Verstellbewegungen der am Packerrahmen angelenkten zweiten Verstelleinrichtung ansteuerbar sind. Die zweite Verstelleinrichtung dreht das Modul zwischen seinen Endlagen, weshalb das Fahrwerk auch als sog. Revolverfahrwerk bezeichnet werden kann. Die Packerwerkzeuge und Räder befinden sich vorzugsweise an gegenüber liegenden oder zumindest entfernten Seiten des Modulrahmens, so dass ein Verschwenken des Modulrahmens zwischen seinen Endlagen die jeweiligen Betriebszustände der erfindungsgemäßen Maschine liefern bzw. ermöglichen kann.

In der ersten Betriebslage ist das Fahrwerk und/oder die heckseitig angeordneten hinteren Stützräder in eine aktive Lage für eine Straßenfahrt gebracht, während die Packereinheit außerhalb eines Eingriffsbereichs mit dem Boden gebracht ist. In der zweiten Betriebslage sind zumindest Teile des Fahrwerks in eine inaktive Lage außerhalb eines Kontaktbereichs mit dem Boden gebracht, während sich die Packereinheit in einem aktiven Zustand im Eingriffsbereich mit dem Boden befindet.

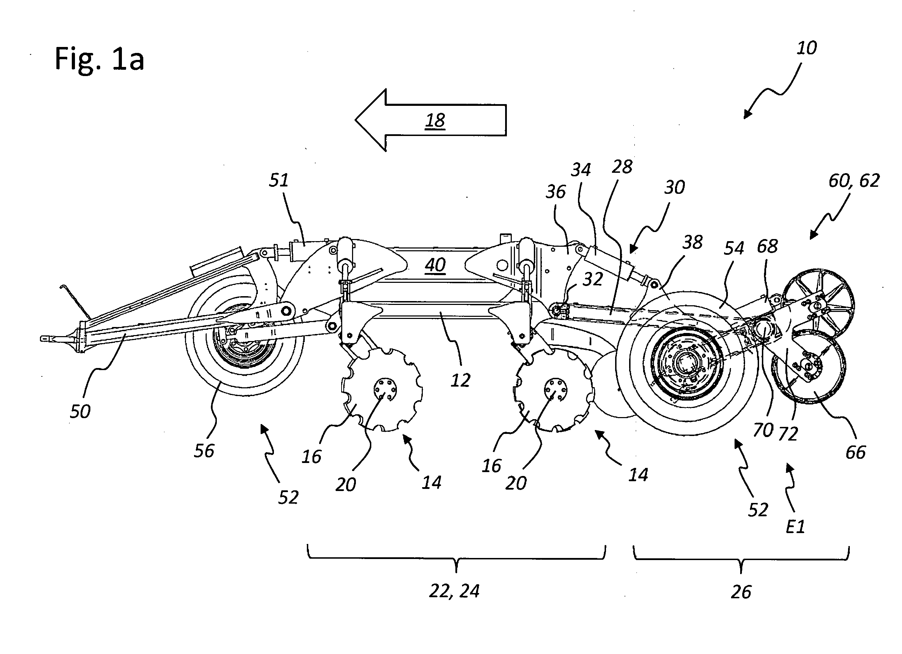

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die als nicht einschränkendes Beispiel dient und auf die beigefügten Zeichnungen Bezug nimmt.
Fig. 1 zeigt in vier verschiedenen schematischen Ansichten eine Ausführungsvariante einer erfindungsgemäßen landwirtschaftlichen Bodenbearbeitungsmaschine, bei der sich ein Fahrwerk in einer ersten Betriebslage für eine Straßenfahrt befindet.
Fig. 2 zeigt in zwei schematischen Ansichten die Maschine gemäß Fig. 1, bei der ein Modulrahmen mit daran angeordneten Packerwerkzeugen und Fahrwerksrädern um einen geringen Schwenkwinkel aus der ersten Betriebslage verschwenkt ist.
Fig. 3 zeigt in zwei weiteren schematischen Ansichten die Maschine gemäß Fig. 1, bei welcher der Modulrahmen um einen größeren Schwenkwinkel aus der ersten in Richtung zu einer zweiten Betriebslage verschwenkt ist.
Fig. 4 zeigt die Maschine gemäß Fig. 1 in drei schematischen Ansichten, wobei die Packerwerkzeuge auf dem Boden aufliegen und sich der Modulrahmen in einer zweiten Betriebslage für eine Feldfahrt befindet.
Fig. 5 zeigt die Bodenbearbeitungsmaschine gemäß Fig. 1 in vier verschiedenen Ansichten, wobei zur Reduzierung der Maschinenbreite für eine Straßenfahrt klappbare Maschinenabschnitte mit Packersegmenten und Bodenbearbeitungswerkzeugen jeweils senkrecht nach oben geschwenkt und aus dem Eingriff mit dem Boden gebracht werden.
Für gleiche oder gleich wirkende Elemente der Erfindung werden in den Figuren 1a bis 5d jeweils gleiche Bezugszeichen verwendet. Ferner werden der Übersicht halber oftmals nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Maschine ausgestaltet sein kann und stellen keine abschließende Begrenzung dar.

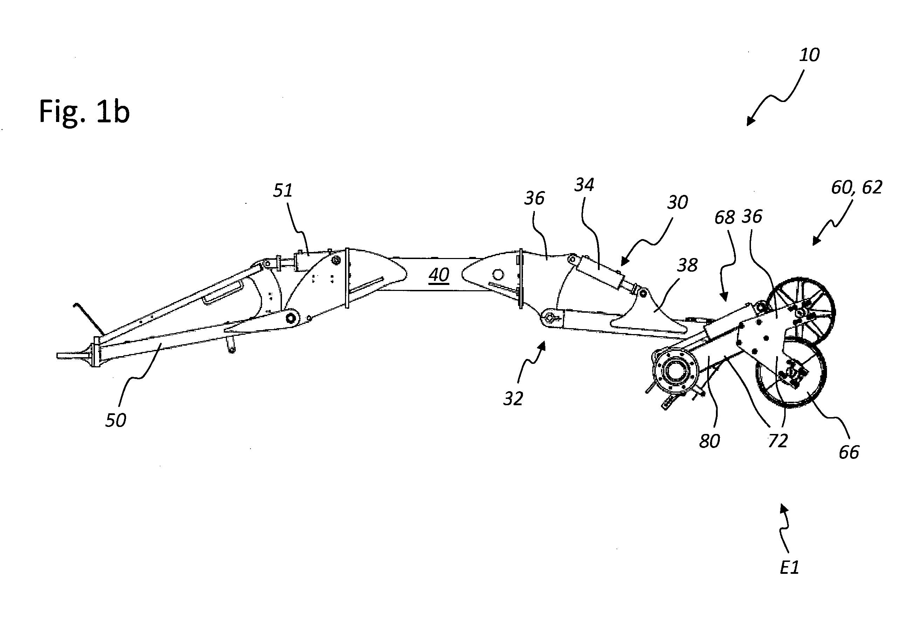

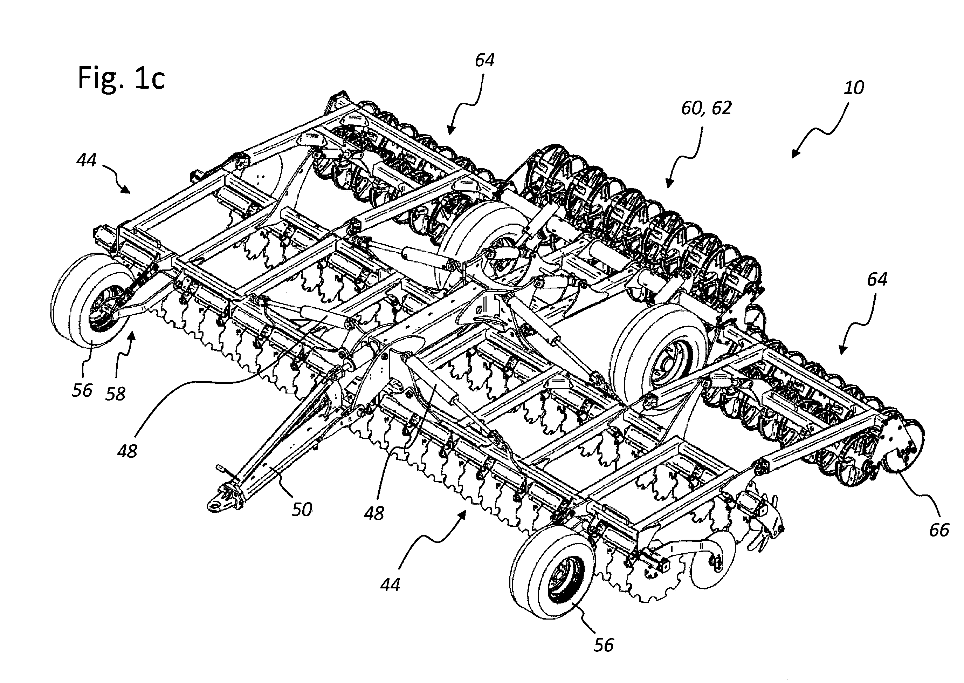

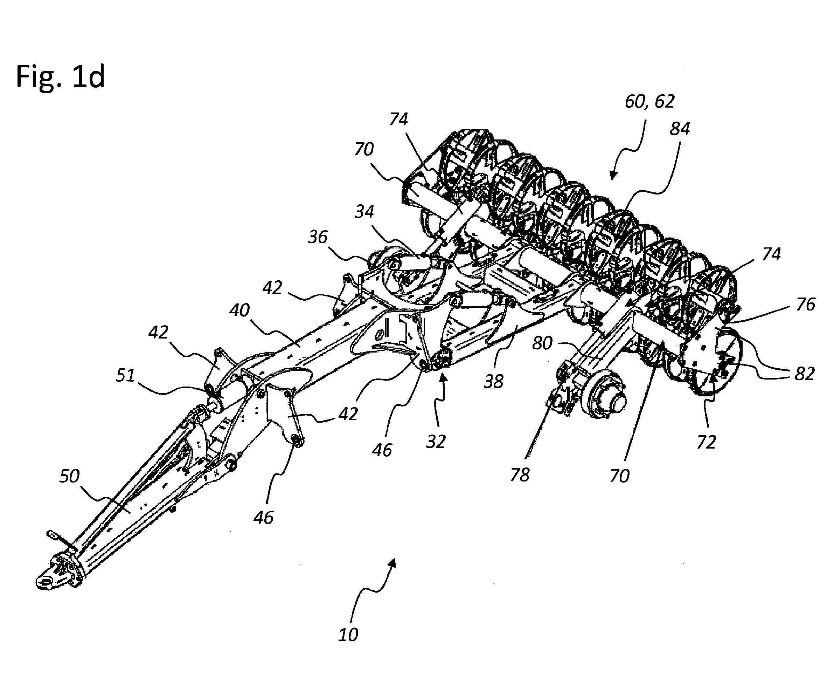

Anhand der vier schematischen Darstellungen der Fig. 1 kann der Aufbau und die grundsätzliche Funktionsweise eines Ausführungsbeispiels eines erfindungsgemäßen gezogenen landwirtschaftlichen Gerätes bzw. einer gezogenen landwirtschaftlichen Maschine 10 verdeutlicht werden. Die in der schematischen Seitenansicht der Fig. 1 a in ihren wesentlichen Komponenten gezeigte gezogene landwirtschaftliche Maschine 10 dient der Bodenbearbeitung oder auch dem Ausbringen von Saatgut oder Dünger mittels hier nicht dargestellter Säaggregate, die in kombinierter Bauweise mit der Maschine 10 zusammengefasst oder bspw. angehängt sein können. Die Maschine 10 weist einen Maschinenrahmen 12 und daran angeordnete Bodenbearbeitungswerkzeuge 14 auf, die bspw. durch eine Vielzahl von Scheiben 16 gebildet sein können, wie dies die schematische Perspektivansicht der Fig. 1c verdeutlicht. Die jeweils quer zur Fahrtrichtung 18 der Maschine 10 angeordneten Scheiben 16 sind gemäß Fig. 1c jeweils um eine gemeinsame Achse 20 oder um mehrere Achsen 20 drehbar, so dass ein mittlerer Abschnitt 22 der Maschine 10 den deren eigentlichen Bearbeitungsbereich 24 bildet (vgl. Fig. 1 a), der in diesem Fall als Scheibenegge mit zwei hintereinander angeordneten Querreihen von an ihrem Außenumfang jeweils profilierten oder gezackten Scheiben 16 gebildet ist. Dieser als Scheibenegge ausgebildete Bearbeitungsbereich 24 der Maschine 10 kann insbesondere zur Stoppelbearbeitung, bspw. zur pfluglosen Bodenbearbeitung dienen.

Dem mittleren Abschnitt 22 der Maschine 10 mit dem Bearbeitungsbereich 24 ist in Fahrtrichtung 18 eine Packereinheit 26 nachgeordnet, die schwenkbeweglich und höhenverstellbar am Maschinenrahmen 12 angelenkt ist. Die Packereinheit 26 ist damit in Fahrtrichtung 18 heckseitig an der Maschine 10 angeordnet, so dass die Packereinheit 26 mit den rotierenden Packerwerkzeugen der Scheibenegge (Bodenbearbeitungsbereich 24) folgen. Wie die Figuren 1 a und 1 b deutlich erkennen lassen, weist die heckseitig am Maschinenrahmen 12 angelenkte Packereinheit 26 einen schwenkbeweglichen und höhenverstellbaren Packerrahmen 28 auf, der über eine erste Verstelleinrichtung 30 mit dem Maschinenrahmen 12 gekoppelt ist. Wie die Darstellungen der Fig. 1 und insbesondere der Fig. 1d erkennen lassen, ist der Packerrahmen 28 in einer Aufhängung 32 am Maschinenrahmen 12 schwenkbar angelenkt, so dass die erste Verstelleinrichtung 30 die am Rahmen 12 angelenkte und um eine ungefähr horizontale Schwenkachse bewegliche Packereinheit 26 als Ganzes absenken oder anheben kann. Zu diesem Zweck ist die erste Verstelleinrichtung 30 im gezeigten Ausführungsbeispiel durch zwei parallele und gemeinsam ansteuerbare Hydraulikzylinder 34 gebildet, die in leicht geneigter Einbaulage zwischen einer rahmenseitigen Anlenkung 36 am Maschinenrahmen 12 und einer weiteren oberseitigen Anlenkung 38 an Oberseiten der Rahmenzüge des Packerrahmens 28 befestigt sind (vgl. Fig. 1 d) und auf diese Weise durch lineare Auszugsbewegungen der jeweiligen Zylinder 34 für ein Anheben und Absenken des Packerrahmens 28 der Packereinheit 26 mittels einer Schwenkbewegung um die Aufhängung 32 sorgen können.

Wie insbesondere die beiden Figuren 1b und 1d verdeutlichen, die nur einen Teil der Maschine 10 zeigen, umfasst der Maschinenrahmen 12 im Wesentlichen ein horizontal angeordnetes, zentrales Vierkant-Rahmenrohr 40, an dem alle übrigen Teile der Maschine 10 aufgehängt sind. An seiner in Fahrtrichtung 18 der Maschine 10 rückseitigen Stirnseite sind die Aufhängung 32 für den um die horizontale Querachse schwenkbaren Packerrahmen 28 der Packereinheit 26 sowie die rahmenseitige Anlenkung 36 für die erste Verstelleinrichtung 30 mit den beiden parallelen Hydraulikzylindern 34 angeordnet.

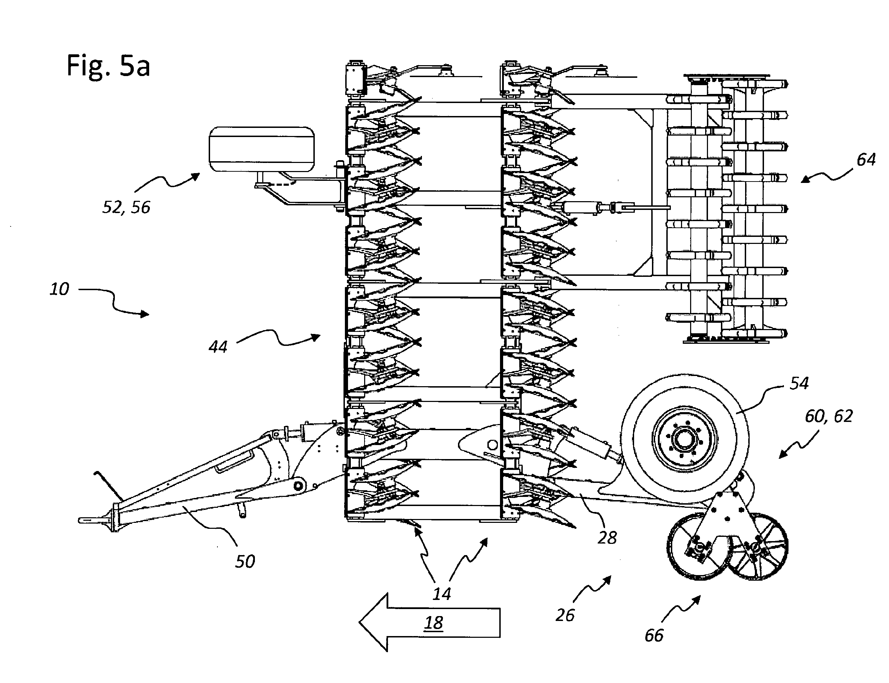

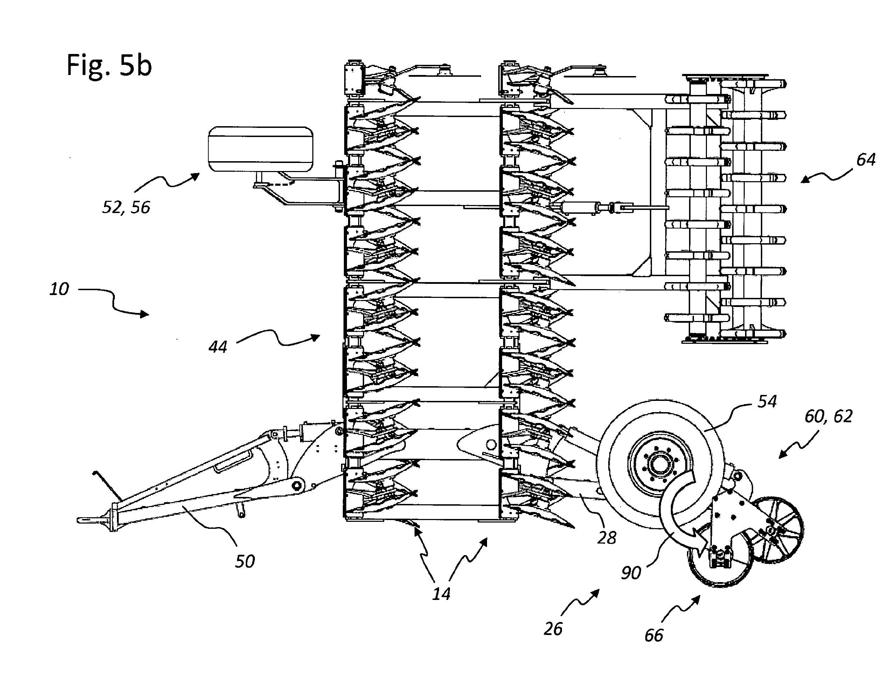

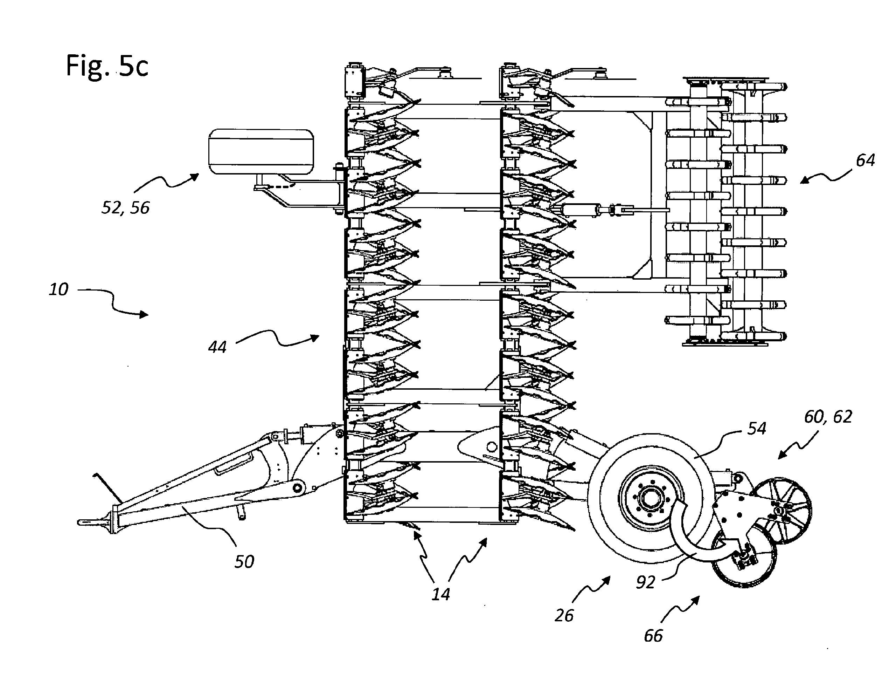

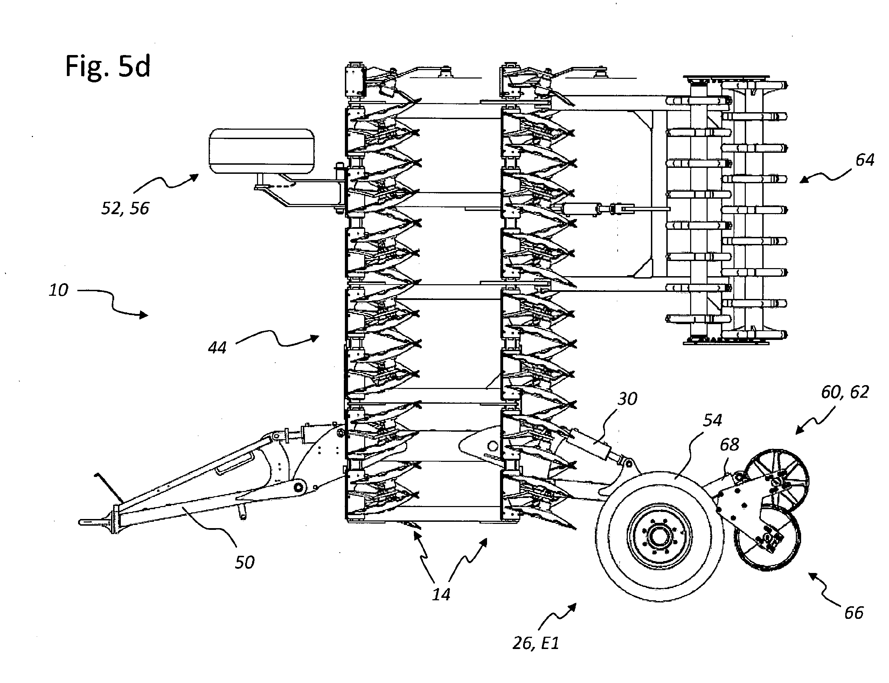

Wie die Figuren 1a bis 1d weiterhin verdeutlichen, sind zu beiden Längsseiten des zentralen Vierkant-Rahmenrohrs 40 des Maschinenrahmens 12 jeweils weitere, vertikal orientierte Aufhängungsbleche 42 angeordnet, die ungefähr einen Abstand voneinander aufweisen, welcher der Länge des zentralen Rohrs 40 entspricht. Die beiden paarweise symmetrisch zur Längserstreckungsrichtung der Maschine 10 angeordneten Aufhängungsbleche 42 dienen der schwenkbaren Verankerung und Beweglichkeit der um horizontale, parallel zur Fahrtrichtung 18 liegende Schwenkachsen nach oben schwenkbaren Rahmenflügel 44, an denen die Bodenbearbeitungswerkzeuge 14 gelagert sind. Da die Maschine 10 für eine Straßenfahrt deutlich zu breit ist, werden die beiden Rahmenflügel 44 entsprechend Fig. 5 vertikal nach oben geschwenkt, sobald die Maschine 10 auf der Straße bewegt werden soll. Die Verschwenkbarkeit der beiden symmetrischen Rahmenflügel 44 um die durch die unteren Befestigungslöcher 46 der Aufhängungsbleche 42 verlaufenden horizontalen Schwenkachsen mittels vier quer liegender Stellzylinder 48 (vgl. Fig. 1 c) wird nochmals anhand der vier schematischen Darstellungen der Fig. 5 näher erläutert.

An der vorderen Stirnseite des Rahmenrohrs 40 des Maschinenrahmens 12 befindet sich eine Zugdeichsel 50 zur Verbindung der gezogenen landwirtschaftlichen Maschine 10 mit einem hier nicht dargestellten landwirtschaftlichen Zugfahrzeug, bspw. einem Traktor. Die Zugdeichsel 50 ist beweglich am Rahmen 12 angelenkt, so dass sie in Längserstreckungsrichtung der Maschine 10 orientiert und um eine quer zur Fahrtrichtung 18 liegende, horizontale Schwenkachse gehoben und gesenkt werden kann, was durch einen parallel zur Fahrtrichtung 18 und Längsachse der Maschine 10 und horizontal liegenden Zugdeichselzylinder 51 gesteuert werden kann, mit dem der Maschinenrahmen 12 gegenüber der Zugdeichsel 50 angehoben und abgesenkt werden kann. Diese Absenk- und Hebevorgänge erfolgen sinnvollerweise in Abstimmung mit der heckseitigen ersten Verstelleinrichtung 30 für die Packereinheit 26, so dass die Bearbeitungstiefe der Maschine 10 und ihrer Bodenbearbeitungswerkzeuge 14 eingestellt werden kann.

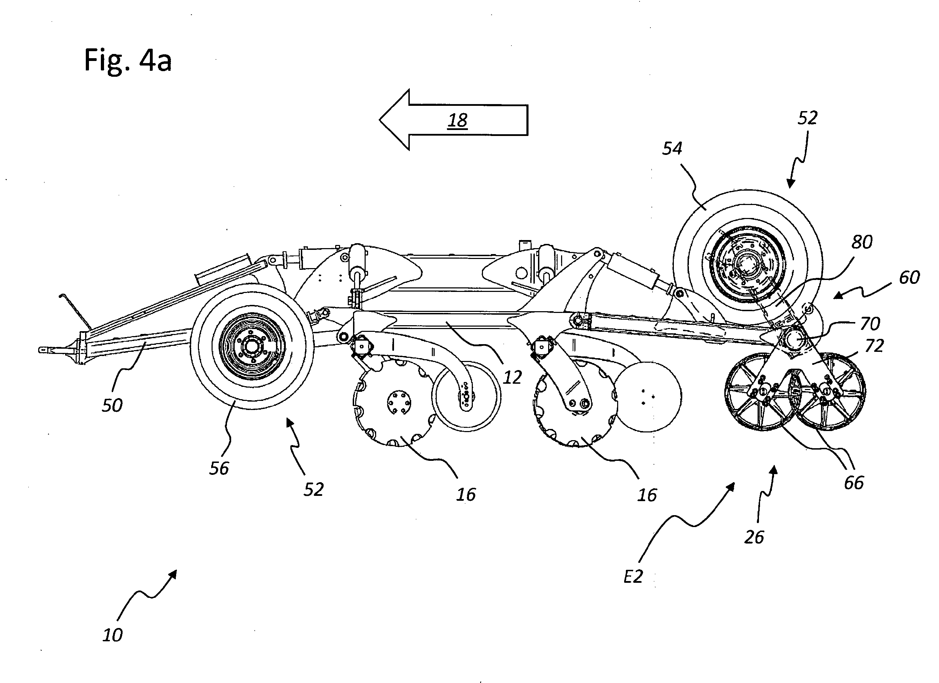

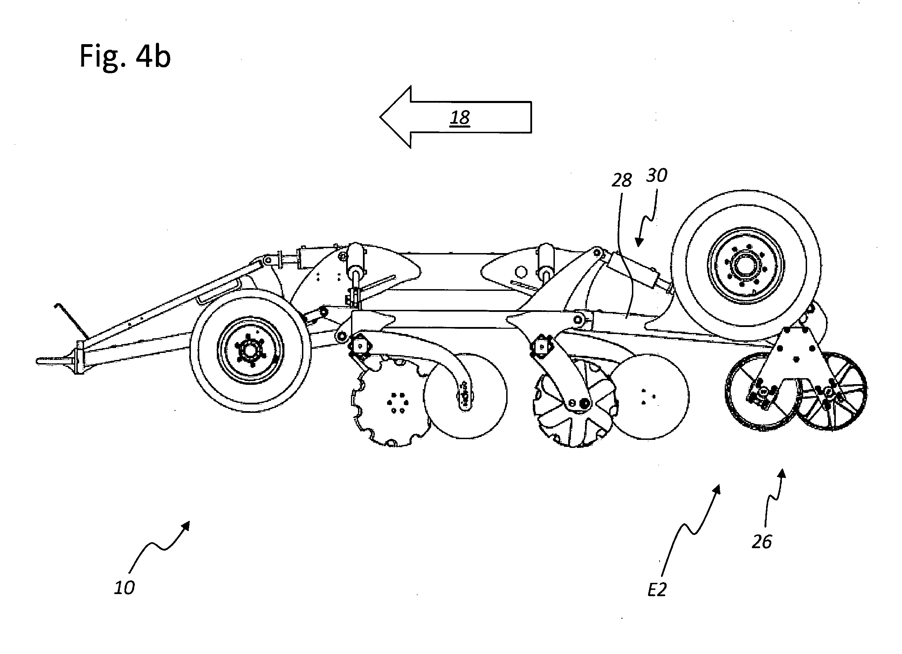

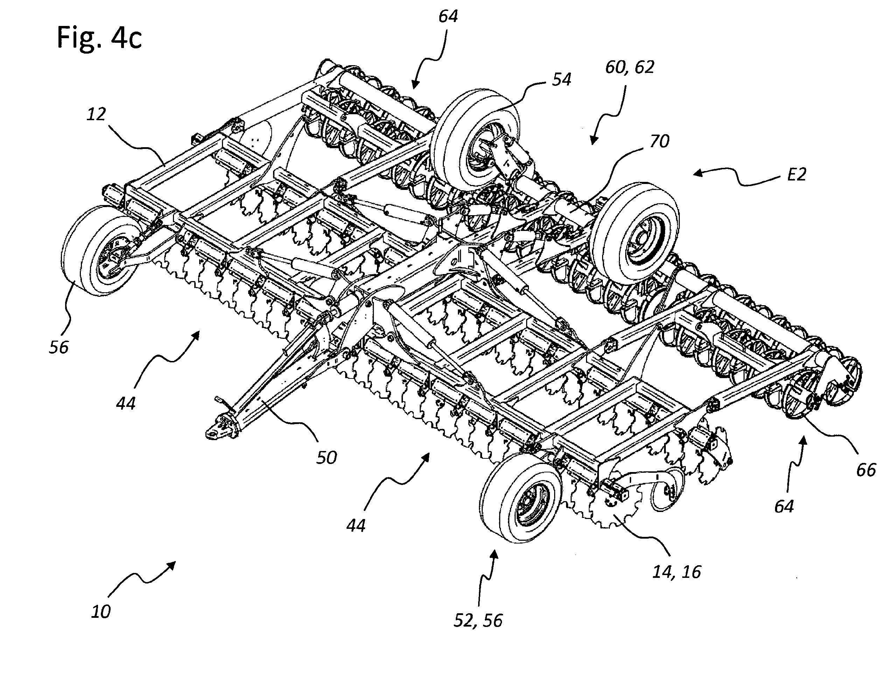

Weiterhin ist der Maschine 10 ein Fahrwerk 52 mit mehreren Stützrädern zugeordnet, das zumindest zwei in einem Heckbereich der Maschine 10 angeordnete hintere Stützräder 54 aufweist, die Teil der Packereinheit 26 und am Packerrahmen 28 aufgehängt sind. Weiterhin umfasst die Maschine zwei optional zu verstehende vordere Stützräder 56, die jedoch nicht Teil eines Straßenfahrwerks sind, sondern lediglich für die Feldfahrt zur Höheneinstellung der Maschine 10 geeignet sind. Wie es die Fig. 1 c erkennen lässt, sind die vorderen Stützräder 56 relativ weit außen an den beiden nach oben schwenkbaren Rahmenflügeln 44 angeordnet und weisen jeweils eine Höheneinstellung 58 auf, die es ermöglicht, die Höhe des Rahmens 12 gegenüber dem Boden bzw. die Bearbeitungstiefe der Bodenbearbeitungswerkzeuge 14 je nach Bedarf zu justieren. Da das Bodenbearbeitungsgerät 10 von einer hier nicht dargestellten Zugmaschine gezogen wird, ist das Fahrwerk 52 mit den vorderen Stützräder 56 und den hinteren Stützrädern 54 höhenverstellbar ausgeführt. Während die vorderen Stützräder 56 in Zusammenwirkung mit der hinteren Packereinheit 26 die Tiefenführung bei der Feldfahrt ermöglichen und zu diesem Zweck mechanisch oder hydraulisch mittels der Höheneinstellung 58 in der Höhe verstellbar sein können, dienen die hinteren Räder 54 des Fahrwerks 52 dem Anheben des gesamten Geräts 10 für die Straßenfahrt (vgl. Fig. 5) oder dem Absenken für die Feldfahrt (vgl. Fig. 4), wobei sich die Maschine 10 heckseitig auf der Packereinheit 26 abstützt.

Die hinteren Räder 54 des Fahrwerks 52 sind durch die Verstellbarkeit des Packerrahmens 28 gegenüber dem Rahmen 12 höhenverstellbar angeordnet und tragen das Bodenbearbeitungsgerät 10 zumindest in Straßenfahrt unter Wahrung eines ausreichenden Abstandes der Scheiben 16 von der Straßenoberfläche. Für die Feldfahrt können zumindest die hinteren Stützräder 54 in der nachfolgend beschriebenen Weise angehoben und nach oben verschwenkt werden, so dass eine gewünschte Bodenbearbeitungstiefe durch entsprechendes Eintauchen der Scheiben 16 der Bodenbearbeitungswerkzeuge 14 erreicht werden kann. Zur Tiefeneinstellung dient weiterhin die erste Verstelleinrichtung 30, die den Packerrahmen 28 gegenüber dem Maschinenrahmen 12 anhebt oder absenkt. Die hinteren Stützräder 54 bilden somit das eigentliche Fahrwerk 52, das für die Straßenfahrt unverzichtbar ist. Die vorderen Stützräder 56 sind dagegen nicht unverzichtbar, da das Bodenbearbeitungsgerät 10 prinzipiell auch als aufgesatteltes Gerät ausgebildet sein könnte, das sich über die Deichsel 50 am Zugfahrzeug abstützen könnte.

Ein weiteres wichtiges Bauelement der erfindungsgemäßen landwirtschaftlichen Maschine ist zudem ein der Packereinheit 26 zugeordnetes Modul 60, das ein mittleres Packersegment 62 der Maschine 10 mit den hinteren Stützrädern 54 koppelt. Äußere Packersegmente 64 sind zu beiden Seiten des mittleren Packersegments 62 in Fluchtung bzw. nahezu in Fluchtung mit diesem angeordnet, wenn sich die beiden Rahmenflügel 44 in nach unten geschwenkter Lage für die Bodenbearbeitung auf dem Acker befinden, wie dies in Fig. 1c erkennbar ist. Jedes der insgesamt drei Packersegmente 62 und 64 umfasst eine Mehrzahl von Packerwalzen, Packerräder oder Packerwerkzeuge 66, die in zwei parallelen Reihen derart in Fahrtrichtung 18 der Maschine 10 paarweise hintereinander angeordnete sind, dass die Außenumfänge der jeweils versetzt zueinander angeordneten Packerwalzen 66 teilweise ineinander greifen. Das Modul 60 ist an den heckseitigen Enden des Packerrahmens 28 schwenkbar gelagert, so dass es gegenüber der Packereinheit 26 und dem Packerrahmen 28 schwenkbeweglich zwischen zwei Endlagen gelagert ist. Das Modul 60 trägt die hinteren Stützräder 54 des Fahrwerks 52 sowie das mittlere Packersegment 62 der Packereinheit 26 mit den Packerwerkzeugen 66 bzw. Packerwalzen. Die Schwenkbarkeit des Moduls 60 sieht vor, dass in den jeweiligen Endlagen die hinteren Stützräder 54 des Fahrwerks 52 (vgl. Fig. 1 a) oder die Packerwerkzeuge 66 zum Boden weisen (vgl. Fig. 4a) und/oder sich im Eingriff oder Kontakt mit dem Boden befinden. Um diese Verstellbarkeit des Moduls 60 zwischen seinen zwei Endlagen zu ermöglichen, ist ihm eine zweite Verstelleinrichtung 68 zugeordnet, die eine unabhängige Verstellung des Moduls 60 von der Höheneinstellung der Packereinheit 26 ermöglicht, welche mittels der ersten Verstelleinrichtung 30 vorzunehmen ist.

Wie es insbesondere die perspektivische, teildemontierte Ansicht der Fig. 1d erkennen lässt, ist am hinteren, der Aufhängung 32 abgewandeten Ende des Packerrahmens 28 ein drehbar gelagertes, horizontal und quer zur Fahrtrichtung 18 der Maschine 10 liegendes Querrohr 70 angeordnet, das einen schwenkbeweglichen Modulrahmen 72 trägt, an dem die Packerwerkzeuge 66 und der hintere Teil des Fahrwerks 52 bzw. die hinteren Stützräder 54 aufgehängt bzw. gelagert sind. Wie es zudem die Fig. 1b erkennen lässt, bildet der Modulrahmen 72 eine in sich starre Verbindung zwischen dem mittleren Packersegment 62 und den hinteren Stützrädern 54 mitsamt ihrer Aufhängung, die mittels des Querrohrs 70 und der zweiten Verstelleinrichtung 68 um die Mittelachse des Querrohrs 70 verschwenkbar ist. Somit sind die Endlagen des schwenkbeweglich am Packerrahmen 28 angeordneten Moduls 60 durch eine Verschwenkung um die mit dem Querrohr 70 zusammenfallende horizontal liegende Schwenkachse definiert, wobei die Endlagen durch Verstellbewegungen der am Packerrahmen 28 angelenkten zweiten Verstelleinrichtung 68 ansteuerbar sind. Die Schwenkachse kann durch zwei ineinander geschobene Rohre - wie hier dargestellt - ausgeführt sein. Denkbar sind jedoch auch Ausführungen, die bspw. Laschen und eine darin gelagerte Welle aufweisen können, die außerhalb des Rohres selbst angeordnet ist. Grundsätzlich können also auch andere Bauarten als die dargestellte Variante, bei der sich koaxiale Rohre gegeneinander verdrehen, eingesetzt werden. Die Drehung bzw. die Führung kann auch anders realisiert werden, wie dies bspw. bei den Anlenkpunkten der Außenflügel der Fall ist.

Im gezeigten Ausführungsbeispiel ist die zweite Verstelleinrichtung 68 durch ein Paar von Hydraulikzylindern 74 gebildet, die einerseits jeweils an einem am Packerrahmen 28 fixierten Ausleger 76 und andererseits an einer der Radseite des Modulrahmens 72 zugeordneten Anlenkung 78 befestigt sind, so dass durch eine Auszugs- oder Einzugsbewegung der Hydraulikzylinder 74 des Moduls 60 der Modulrahmen 72 zwischen seinen Endlagen gedreht werden kann.

In der ersten Betriebslage der Maschine 10 entsprechend Fig. 1 a befindet sich das schwenkbare Modul 60 in seiner ersten Endlage E1, bei der die Maschine 10 für die Straßenfahrt vorbereitet und geeignet ist. Gemäß Fig. 1b sind hierbei die Hydraulikzylinder 74 der zweiten Verstelleinrichtung 68 ausgefahren, so dass die hinteren Stützräder 54 abgesenkt und der Modulrahmen 72 in einer Weise verschwenkt ist, dass die Packerwerkzeuge 66 des mittleren Packersegments 62 um ca. 90 Grad nach hinten verschwenkt und damit auch vom Boden abgehoben sind (vgl. hierzu auch Fig. 1c sowie die Darstellung der Fig. 5d).

In der zweiten Betriebslage der Maschine 10 (entsprechend Fig. 4) befindet sich das schwenkbare Modul dagegen in seiner zweiten Endlage E2, bei der die Maschine 10 für die Feldfahrt vorbereitet ist, wie dies die Fig. 4a erkennen lässt. Die hinteren Stützräder 54 des Fahrwerks 52 sind hierbei angehoben, was sich durch einen Einzug der Hydraulikzylinder 74 der zweiten Verstelleinrichtung 68 erreichen lässt. Der Verstell- oder Schwenkwinkel des Modulrahmens 72 beträgt zwischen seinen beiden Endlagen E1 und E2 ca. 90 Grad, so dass die Räder 54 in der zweiten Endlage E2 nach oben geschwenkt sind (vgl. die Figuren 4a, 4b und 4c), während die beiden Reihen der Packerwerkzeuge 66 des mittleren Packersegments 62 voll auf dem Boden aufliegen.

Das Modul 60 bildet somit eine kombinierte Funktionseinheit aus hinterem Teil des Fahrwerks 52 und der Packereinheit 26. Zu diesem Zweck weist der Modulrahmen 72 des schwenkbaren Moduls 60 Auslegerarme 80 und 82 für das Fahrwerk 52 bzw. die Packerwerkzeuge 66 auf, wobei die bauliche Einheit aus Modulrahmen 72 und Auslegerarmen 80, 82 in sich starr ausgebildet ist (vgl. Fig. 1b). Während die ersten Auslegerarme 80 gleichzeitig die Anlenkungen 78 für die Hydraulikzylinder 74 der zweiten Verstelleinrichtung 68 sowie die Radträger für die hinteren Stützräder 54 tragen, sind die zweiten Auslegerarme 82 des Modulrahmens 72 als gabelförmige bzw. als V-förmige Bleche ausgestaltet, welche an den Querenden des Querrohrs 70 angeordnet sind und die beiden parallelen Packerwellen 84 des mittleren Packersegments 62 mit den daran angeordneten Packerwerkzeugen 66 tragen.

Die beiden Endlagen E1 und E2 können insbesondere durch die Ansteuerung der zweiten Verstelleinrichtung 68 jeweils die verriegelbaren bzw. feststellbaren ersten und zweiten Betriebslagen der Maschine 10 definieren. Während die Figuren 1a bis 1d die erste Endlage E1 verdeutlichen, bei welcher die Hydraulikzylinder 74 voll ausgefahren sind und dadurch das Modul 60 mit den Packerwerkzeugen 66 um das Querrohr 70 in Richtung zum Maschinenheck gedreht sind, zeigen die Figuren 2ff. einen Verstellvorgang in Richtung zur zweiten Endlage E2, die gemäß Fig. 4 dadurch erreicht ist, dass die Hydraulikzylinder 74 der zweiten Verstelleinrichtung 68 voll eingezogen sind und dadurch die Anlenkung 78 am ersten Auslegerarm 80 mit dem daran gelagerten hinteren Stützrad 54 nach oben ziehen und gleichzeitig den Modulrahmen 72 um das Querrohr 70 nach unten drehen. Damit wird das Modul 60 derart verdreht, dass die hinteren Stützräder 54 angehoben und die beiden Packerwellen 84 mit den daran angeordneten Packerwerkzeugen 66 zum Boden gedreht sind, so dass sie dort aufliegen können.

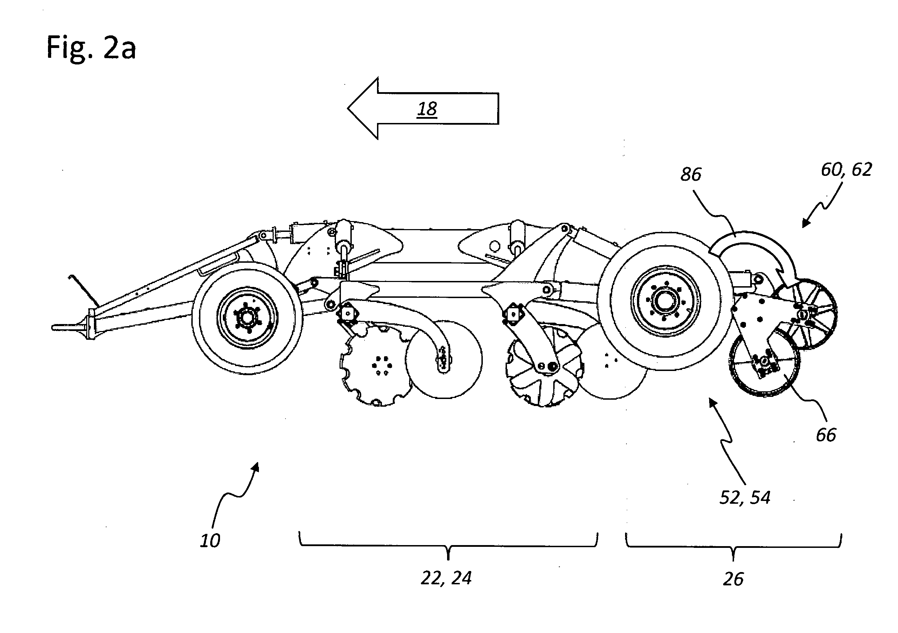

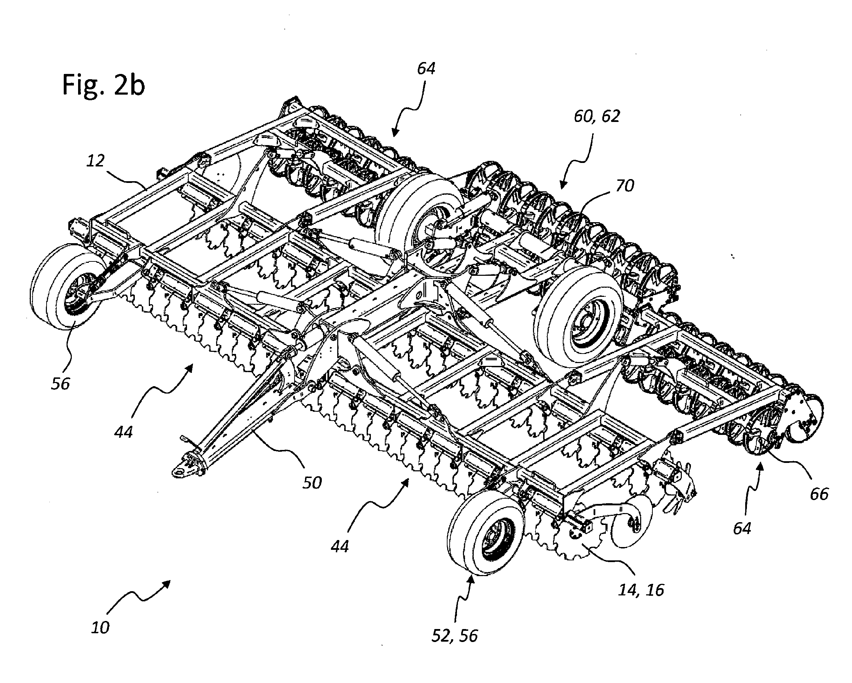

Die Figuren 2a und 2b verdeutlichen, wie der Schwenkvorgang des hinteren Moduls 60 der Maschine 10 um das Querrohr 70 durch die Einzugsbewegung der beiden Hydraulikzylinder 74 der zweiten Verstelleinrichtung 68 erfolgt. Dabei bleibt der am Packerrahmen 28 fest verankerte obere Ausleger 76 für die Anlenkung des jeweiligen Hydraulikzylinders 74 starr, während die untere Anlenkung 78 den Auslegerarm 80 des Modulrahmens 72 (vgl. hierzu Fig. 1b und Fig. 1d) mit dem daran gelagerten hinteren Stützrad 54 in Pfeilrichtung 86 nach oben dreht (vgl. Fig. 2a). Die hinteren Stützräder 54 des Fahrwerks 52 der Maschine 10 sind in der Darstellung bereits einige Zentimeter vom Boden abgehoben, während sich die vordere der beiden Packerwalzen 66 bereits dem Boden nähert bzw. dort aufsetzt. Auch wenn das Fahrwerk 52 zumindest im hinteren Bereich der Maschine 10 durch vollständiges Abheben der hinteren Stützräder 54 vom Boden bereits funktionslos ist, ist die zweite Endlage E2 jedoch noch nicht erreicht.

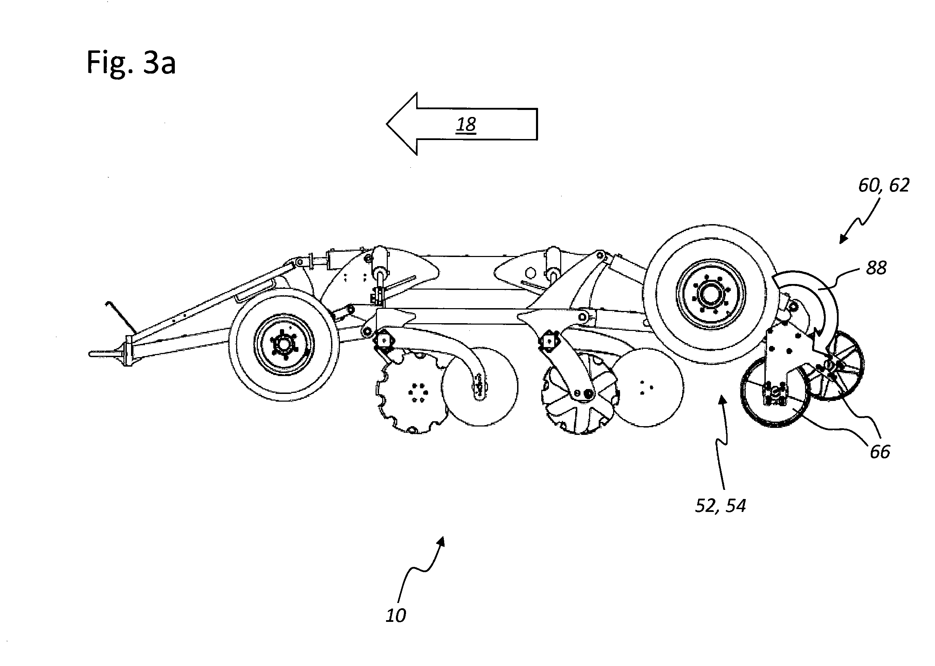

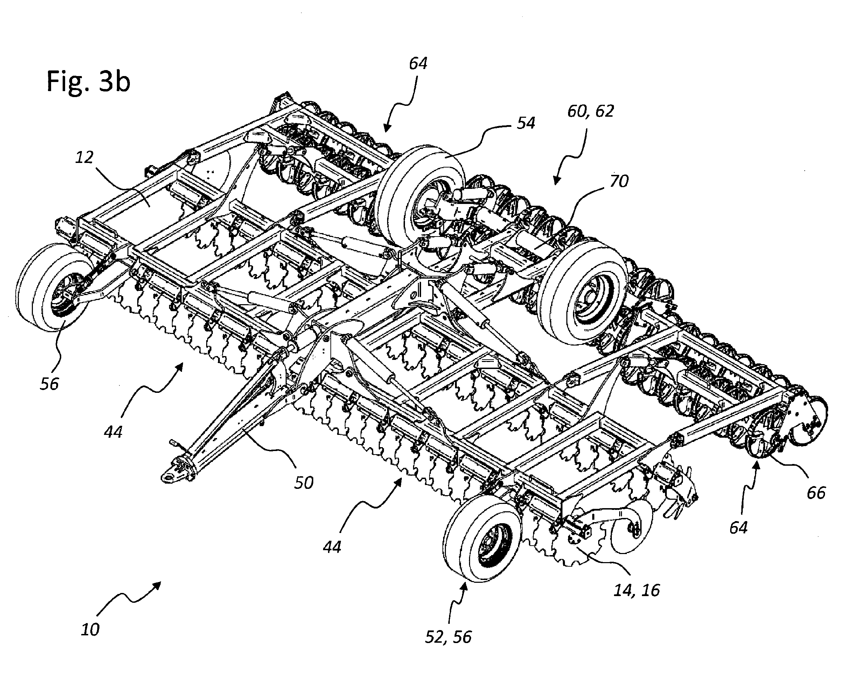

Die Figuren 3a und 3b verdeutlichen, wie der weitere Schwenkvorgang des hinteren Moduls 60 der Maschine 10 um das Querrohr 70 durch die weitere Einzugsbewegung der beiden Hydraulikzylinder 74 der zweiten Verstelleinrichtung 68 fortschreitet. Dabei bleibt der am Packerrahmen 28 fest verankerte obere Ausleger 76 für die Anlenkung des jeweiligen Hydraulikzylinders 74 starr, während die untere Anlenkung 78 den Auslegerarm 80 des Modulrahmens 72 (vgl. hierzu Fig. 1b und Fig. 1d) mit dem daran gelagerten hinteren Stützrad 54 in Pfeilrichtung 88 nach oben dreht (vgl. Fig. 3a). Die hinteren Stützräder 54 des Fahrwerks 52 der Maschine 10 sind in der Darstellung schon relativ weit vom Boden abgehoben und nach oben geschwenkt, während die vordere der beiden Packerwalzen 66 bereits am Boden aufliegt. Auch hierbei ist die zweite Endlage E2 jedoch noch nicht erreicht.

Die Figuren 4a bis 4c verdeutlichen die zweite Endlage E2 der Maschine 10, bei der die beiden Hydraulikzylinder 74 der zweiten Verstelleinrichtung 68 vollständig eingezogen sind. Dadurch ist die untere Anlenkung 78 mit dem Auslegerarm 80 des Modulrahmens 72 mitsamt dem daran gelagerten hinteren Stützrad 54 nach oben gedreht (vgl. Fig. 4a, Fig. 4b). Dadurch sind die hinteren Stützräder 54 des Fahrwerks 52 der Maschine 10 vollständig nach oben geschwenkt und befinden sich oberhalb des Packerrahmens 28, während die beiden Packerwalzen 66 parallel am Boden aufliegen, wodurch die zweite Endlage E2 charakterisiert ist.

Bei allen in den Figuren 1 bis 4 gezeigten Betriebszuständen der Maschine 10 zwischen der ersten Endlage E1 und der zweiten Endlage E2 bleibt die Verstellbarkeit des Packerrahmens 28 und damit die Höheneinstellbarkeit der hinteren Packereinheit 26 vollständig erhalten, so dass die erste Verstelleinrichtung 30 eine unabhängige Höhenverstellung der gesamten hinteren Packereinheit 26 ermöglicht, unabhängig von der mittels der zweiten Verstelleinrichtung 68 jeweils eingestellten Betriebs- oder Endlage E1 oder E2.

Die schematischen Seitenansichten der Figuren 5a bis 5d zeigen die Maschine 10, wie sie für die Straßenfahrt und für alle Arten von Transportfahrten konfiguriert sein muss. Die beiden Rahmenflügel 44, die links und rechts an den unteren Befestigungslöchern 46 der Aufhängungsbleche 42 des zentralen Rahmenrohrs 40 schwenkbar gelagert sind (vgl. hierzu die Details in Fig. 1c und Fig. 1 d), wurden mit Hilfe der eingezogenen Stellzylinder 48 vertikal nach oben geschwenkt, so dass eine Transportbreite der Maschine 10 von weniger als drei Metern realisiert werden kann, was für Transportfahrten auf öffentlichen Straßen unumgänglich ist. Da die beiden linken und rechten äußeren Packersegmente 64 nicht mit dem mittleren Packersegment 62 verbunden, sondern mit den Rahmenflügeln 44 gekoppelt sind, werden sie mitsamt diesen ebenfalls vertikal nach oben geschwenkt, was in den Figuren 5a bis 5d verdeutlicht ist. Die beiden vertikal und parallel nebeneinander liegenden äußeren Packersegmente 64 liegen hierbei oberhalb des mittleren Packersegments 62 und dem Modul 60 mit dem hinteren Teil des Fahrwerks 52, das durch die hinteren Stützräder 54 gebildet ist. Zwar zeigt die Fig. 5a eine Lage des Moduls 60, die der zweiten Endlage E2 mit auf dem Boden aufgesetzten Packerwalzen 66 und vollständig vom Boden abgehobenen hinteren Stützrädern 54 entspricht. Da die Maschine 10 jedoch in dieser Lage aufgrund der abgehobenen Bodenbearbeitungswerkzeuge 14 bzw. Scheiben 16 nicht sinnvoll zu betreiben ist, wurde die zweite Betriebslage E2 hier nicht eingezeichnet.

Auch wenn die nach oben geschwenkten Rahmenflügel 44 und seitlichen Packersegmente 64 keinen Feldbetrieb zulassen, dienen die Figuren 5a bis 5d zur Verdeutlichung einer Rückschwenkbewegung des Moduls 60, um von der zweiten Betriebslage E2 in die erste Betriebslage E1 zu gelangen.

Die Fig. 5b verdeutlicht, wie der Rückschwenkvorgang des hinteren Moduls 60 der Maschine 10 um das Querrohr 70 durch die Auszugsbewegung der beiden Hydraulikzylinder 74 der zweiten Verstelleinrichtung 68 erfolgt. Dabei bleibt der am Packerrahmen 28 fest verankerte obere Ausleger 76 für die Anlenkung des jeweiligen Hydraulikzylinders 74 starr, während die untere Anlenkung 78 den Auslegerarm 80 des Modulrahmens 72 (vgl. hierzu Fig. 1b und Fig. 1d) mit dem daran gelagerten hinteren Stützrad 54 in Pfeilrichtung 90 nach unten dreht (vgl. Fig. 5b). Die hinteren Stützräder 54 des Fahrwerks 52 der Maschine 10 sind in der Darstellung der Fig. 5b bereits etwas abgesenkt, während die hintere der beiden Packerwalzen 66 bereits vom Boden abgehoben ist. Da das Fahrwerk 52 zumindest im hinteren Bereich der Maschine 10 durch die Entfernung der hinteren Stützräder 54 vom Boden noch funktionslos ist, ist die erste Endlage E1 noch nicht erreicht.

Die Fig. 5c verdeutlicht, wie der Rückschwenkvorgang des hinteren Moduls 60 der Maschine 10 um das Querrohr 70 durch die Auszugsbewegung der beiden Hydraulikzylinder 74 der zweiten Verstelleinrichtung 68 erfolgt. Dabei bleibt der am Packerrahmen 28 fest verankerte obere Ausleger 76 für die Anlenkung des jeweiligen Hydraulikzylinders 74 starr, während die untere Anlenkung 78 den Auslegerarm 80 des Modulrahmens 72 (vgl. hierzu Fig. 1b und Fig. 1d) mit dem daran gelagerten hinteren Stützrad 54 in Pfeilrichtung 90 nach unten dreht (vgl. Fig. 5b). Die hinteren Stützräder 54 des Fahrwerks 52 der Maschine 10 sind in der Darstellung der Fig. 5b bereits etwas abgesenkt, während die hintere der beiden Packerwalzen 66 bereits vom Boden abgehoben ist. Da das Fahrwerk 52 zumindest im hinteren Bereich der Maschine 10 durch die Entfernung der hinteren Stützräder 54 vom Boden noch funktionslos ist, ist die erste Endlage E1 noch nicht erreicht.

Die Fig. 5c verdeutlicht den weiteren Verlauf des Rückschwenkvorgangs des hinteren Moduls 60 der Maschine 10 um das Querrohr 70 durch die weitere Auszugsbewegung der beiden Hydraulikzylinder 74 der zweiten Verstelleinrichtung 68. Das hintere Stützrad 54 dreht dabei in Pfeilrichtung 92 weiter nach unten (vgl. Fig. 5c). Die hinteren Stützräder 54 des Fahrwerks 52 der Maschine 10 werden somit gemäß Fig. 5c noch etwas weiter abgesenkt, während auch die vordere der beiden Packerwalzen 66 allmählich vom Boden abgehoben wird. Da aber das Fahrwerk 52 zumindest im hinteren Bereich der Maschine 10 durch die Entfernung der hinteren Stützräder 54 vom Boden noch immer funktionslos ist, ist die erste Endlage E1 noch nicht erreicht.

Diese erste Endlage E1 ist mit der Anordnung gemäß Fig. 5d erreicht und eingestellt, da die solchermaßen konfigurierte Maschine 10 mit den nach oben geschwenkten Rahmenteilen 44 und 64 (inklusive der optionalen vorderen Stützräder 56) und den am Boden abrollenden hinteren Stützrädern 54 des Fahrwerks 52 problemlos über die Straße bewegt werden kann. Die Maschine 10 ist hierbei über die Zugdeichsel 50 an einem Zugfahrzeug angehängt. Die Packerwerkzeuge 66 sind vom Boden abgehoben, so dass auch kein unbeabsichtigter Kontakt mit der Straße möglich ist. Der Packerrahmen 28 wird nach Zweckmäßigkeitserwägungen in seiner Höhe justiert, was auch bei Straßenfahrten über die erste Verstelleinrichtung 30 möglich ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Maschine, Bodenbearbeitungsgerät, Bodenbearbeitungskombination
- 12: Rahmen, Maschinenrahmen
- 14: Bodenbearbeitungswerkzeuge
- 16: Scheiben
- 18: Fahrtrichtung
- 20: Achse, Drehachse
- 22: mittlerer Abschnitt
- 24: Bearbeitungsbereich, Bodenbearbeitungsbereich
- 26: Packereinheit
- 28: Packerrahmen
- 30: erste Verstelleinrichtung
- 32: Aufhängung
- 34: Hydraulikzylinder
- 36: rahmenseitige Anlenkung
- 38: oberseitige Anlenkung
- 40: Rahmenrohr, Vierkant-Rahmenrohr
- 42: Aufhängungsblech
- 44: Rahmenflügel
- 46: unteres Befestigungsloch
- 48: Stellzylinder
- 50: Zugdeichsel
- 51: Zugdeichselzylinder
- 52: Fahrwerk
- 54: hintere Stützräder
- 56: vordere Stützräder
- 58: Höheneinstellung
- 60: Modul, Funktionseinheit
- 62: mittleres Packersegment
- 64: äußeres Packersegment
- 66: Packerwalzen, Packerwerkzeuge
- 68: zweite Verstelleinrichtung
- 70: Querrohr, Schwenkachse, Drehpunkt
- 72: Modulrahmen
- 74: Hydraulikzylinder
- 76: Ausleger
- 78: Anlenkung
- 80: erster Auslegerarm
- 82: zweiter Auslegerarm, Auslegerarmpaar
- 84: Packerwelle
- 86: Drehrichtung (Modul) zur zweiten Endlage
- 88: Drehrichtung (Modul) zur zweiten Endlage
- 90: Rückdrehrichtung (Modul) zur ersten Endlage
- 92: Rückdrehrichtung (Modul) zur ersten Endlage

- E1: erste Endlage
- E2: zweite Endlage

## Patentansprüche

1. Gezogene landwirtschaftliche Maschine (10) zur Bodenbearbeitung und/oder zum Ausbringen von Saatgut, mit einem Maschinenrahmen (12) und daran angeordneten Bodenbearbeitungswerkzeugen (14), mit einer in Fahrtrichtung (18) der Maschine (10) den Bodenbearbeitungswerkzeugen (14) nachgeordneten, schwenkbeweglich und höhenverstellbar am Maschinenrahmen (12) angelenkten Packereinheit (26), der ein Fahrwerk (52) zugeordnet ist, das mindestens zwei in einem Heckbereich der Maschine (10) angeordnete hintere Stützräder (54) aufweist, wobei die schwenkbeweglich und höhenverstellbar am Maschinenrahmen (12) gelagerte Packereinheit (26) ein gegenüber dieser schwenkbeweglich zwischen zwei Endlagen (E1, E2) gelagertes Modul (60) mit daran angeordnetem Fahrwerk (52) und/oder hinteren Stützrädern (54) sowie Packerwerkzeugen (66) aufweist, wobei in den jeweiligen Endlagen (E1, E2) das Fahrwerk (52) oder die Packerwerkzeuge (66) zum Boden weisen und/oder sich im Eingriff oder Kontakt mit dem Boden befinden, und wobei der Packereinheit (26) und dem daran gelagerten Modul (60) jeweils separate Verstelleinrichtungen (30, 68) zur unabhängig voneinander steuerbaren Verstellung und/oder Schwenkbeweglichkeit der Packereinheit (26) sowie dem daran gelagerten Modul (60) zugeordnet sind, **dadurch gekennzeichnet, dass** das Modul (60) einen schwenkbeweglich am Packerrahmen (28) angeordneten Modulrahmen (72) umfasst, an dem die Packerwerkzeuge (66) und das Fahrwerk (52) und/oder die hinteren Stützräder (54) aufgehängt bzw. gelagert sind.

2. Maschine nach Anspruch 1, bei der die am Maschinenrahmen (12) angelenkte Packereinheit (26) einen schwenkbeweglichen und höhenverstellbaren Packerrahmen (28) umfasst, der über wenigstens eine erste Verstelleinrichtung (30) mit dem Maschinenrahmen (12) gekoppelt ist.

3. Maschine nach Anspruch 2, bei der die wenigstens eine erste Verstelleinrichtung (30) die am Rahmen (12) angelenkte und um eine ungefähr horizontale Schwenkachse bewegliche Packereinheit (26) als Ganzes absenkt oder anhebt.

4. Maschine nach einem der Ansprüche 1 bis 3, bei der die Endlagen (E1, E2) des schwenkbeweglich am Packerrahmen (28) angeordneten Moduls (60) durch eine Verschwenkung um eine ungefähr horizontal liegende Schwenkachse definiert sind, wobei die Endlagen (E1, E2) durch Verstellbewegungen wenigstens einer am Packerrahmen (28) angelenkten zweiten Verstelleinrichtung (68) ansteuerbar sind.

5. Maschine nach einem der Ansprüche 1 bis 4, bei der die kombinierte Funktionseinheit aus Fahrwerk (52) und Packereinheit (26) jeweils eine horizontale, am Maschinenrahmen (12) gelagerte und quer zur Fahrtrichtung (18) ausgerichtete Schwenkachse (70) sowie daran angeordnete Auslegerarme (80, 82) für das Fahrwerk (52) bzw. die Packereinheit (26) aufweist, wobei die bauliche Einheit aus Schwenkachse (70) und Auslegerarmen (80, 82) für sich starr ausgebildet ist.

6. Maschine nach Anspruch 5, bei der den ersten und zweiten Betriebslagen der Maschine (10) jeweils die verriegelbaren Endlagen (E1, E2) des Schwenkbereichs der Schwenkachse (70) mit daran angeordneten Auslegerarmen (80, 82) für das Fahrwerk (52) und die Packereinheit (26) zugeordnet sind.

7. Maschine nach einem der Ansprüche 1 bis 6, bei der die kombinierte Funktionseinheit bzw. das Modul (60) aus Fahrwerk (52) und Packereinheit (26) in Querrichtung ungefähr in der Mitte das Gerätes (10) angeordnet ist und das Fahrwerk (52) in der ersten Betriebslage zu Transportzwecken dient.

8. Verfahren zur Umrüstung und/oder Funktionsänderung einer gezogenen landwirtschaftlichen Maschine (10) nach Anspruch 1 zwischen einem ersten Betriebsmodus zur Bodenbearbeitung und/oder zum Ausbringen von Saatgut und einem zweiten Betriebsmodus für eine Straßenfahrt, wobei die Maschine (10) einen Maschinenrahmen (12) mit daran angeordneten Bodenbearbeitungswerkzeugen (14) und eine in Fahrtrichtung (18) der Maschine (10) den Bodenbearbeitungswerkzeugen (14) nachgeordnete, schwenkbeweglich und höhenverstellbar am Maschinenrahmen (12) angelenkte Packereinheit (26) umfasst, wobei der Packereinheit (26) ein Fahrwerk (52) zugeordnet ist, das mindestens zwei in einem Heckbereich der Maschine (10) angeordnete hintere Stützräder (54) aufweist, wobei die Packereinheit (26) schwenkbeweglich und höhenverstellbar am Maschinenrahmen (12) gelagert ist und ein schwenkbeweglich zwischen zwei Endlagen (E1, E2) gelagertes Modul (60) mit daran angeordnetem Fahrwerk (52) und/oder hinteren Stützrädern (54) sowie Packerwerkzeugen (66) aufweist, wobei in den jeweiligen Endlagen (E1, E2) das Fahrwerk (52) oder die Packerwerkzeuge (66) zum Boden weisen und/oder sich im Eingriff oder Kontakt mit dem Boden befinden, und wobei die Packereinheit (26) mitsamt dem daran gelagerten Modul (60) mittels einer ersten Verstelleinrichtung (30) gegenüber dem Maschinenrahmen (12) höhenverstellbar und/oder schwenkbeweglich ist, wobei das Modul (60) mittels wenigstens einer zweiten Verstelleinrichtung (68) zwischen seinen beiden Endlagen (E1, E2) zur Straßenfahrt oder zur Feldfahrt umschaltbar ist, wobei eine Verstellung oder Verschwenkung des schwenkbeweglich am Packerrahmen (28) angeordneten Moduls (60) um eine ungefähr horizontal liegende Schwenkachse (70) seine Endlagen (E1, E2) definieren, und wobei die Endlagen (E1, E2) durch Verstellbewegungen der am Packerrahmen (28) angelenkten zweiten Verstelleinrichtung (68) ansteuerbar sind.

9. Verfahren nach Anspruch 8, bei dem die wenigstens eine erste Verstelleinrichtung (30) die am Rahmen (12) angelenkte und um eine ungefähr horizontale Schwenkachse bewegliche Packereinheit (26) als Ganzes absenkt oder anhebt.

10. Verfahren nach Anspruch 8 oder 9, bei dem in einer ersten Betriebslage das Fahrwerk (52) und/oder die heckseitig angeordneten hinteren Stützräder (54) in eine aktive Lage für eine Straßenfahrt gebracht ist und die Packereinheit (26) außerhalb eines Eingriffsbereichs mit dem Boden gebracht ist, und bei der in einer zweiten Betriebslage zumindest Teile des Fahrwerks (52) in eine inaktive Lage außerhalb eines Kontaktbereichs mit dem Boden gebracht sind und die Packereinheit (26) sich in einem aktiven Zustand im Eingriffsbereich mit dem Boden befindet.

11. Verfahren nach einem der Ansprüche 8 bis 10, bei dem in einer ersten Betriebslage das Fahrwerk (52) und/oder die heckseitig angeordneten hinteren Stützräder (54) in eine aktive Lage für eine Straßenfahrt gebracht ist und die Packerwerkzeuge (66) außerhalb eines Eingriffsbereichs mit dem Boden gebracht sind, und bei der in einer zweiten Betriebslage zumindest Teile des Fahrwerks (52) in eine inaktive Lage außerhalb eines Kontaktbereichs mit dem Boden gebracht sind und die Packerwerkzeuge (66) sich in einem aktiven Zustand im Eingriffsbereich mit dem Boden befinden.

## Claims

1. A towed agricultural machine (10) for tilling and/or for sowing seeds, the machine (10) comprising a machine frame (12) and tillage tools (14) arranged thereon, and further comprising a packer unit (26) arranged subsequent to the tillage tools (14) in the driving direction (18) of the machine (10) and hinged pivotally and height adjustably on the machine frame (12), which packer unit (26) is assigned a running gear (52) comprising at least two rear support wheels (54), which are arranged in the area of the rear end of the machine (10), wherein the packer unit (26), which is pivotally and height adjustably journaled on the machine frame (12), comprises a module (60) with a running gear (52) and/or rear support wheels (54) as well as packer tools (66) arranged thereon, which module (60) is journaled to be pivotal in relation to the packer unit (26) between two stop positions (E1, E2), wherein either the running gear (52) or the packer tools (66) face toward the ground and/or are in engagement or in contact with the ground in the respective stop positions (E1, E2), and wherein the packer unit (26) and the module (60) journaled thereon are each assigned separate adjustment devices (30, 68), which are controllable independently from each other and which are employed for adjusting and/or pivoting the packer unit (26) and the module (60) arranged thereon,
**characterised in that** the module (60) comprises a module frame (72) arranged pivotally on the packer frame (28), with the packer tools (66) and the running gear (52) and/or the rear support wheels (54) being hinged or journaled onto the said module frame (72).

2. The machine as recited in claim 1 wherein the packer unit (26), which is hinged onto the machine frame (12), comprises a pivotal and height adjustable packer frame (28), which is coupled to the machine frame (12) by means of at least one first adjustment device (30).

3. The machine as recited in claim 2 wherein the at least one first adjustment device (30) lowers or lifts the packer unit (26) as a whole, said packer unit (26) being hinged on the frame (12) and movable about an approximately horizontal swivel axis.

4. The machine as recited in one of the claims 1 to 3 wherein the stop positions (E1, E2) of the module (60), which is pivotally arranged on the packer frame (28), are defined by a pivoting movement around an approximately horizontally positioned swivel axis, and wherein the stop positions (E1, E2) are controllable by means of adjustment movements of at least one second adjustment device (68) that is hinged onto the packer frame (28).

5. The machine as recited in one of the claims 1 to 4 wherein the combined functional unit of running gear (52) and packer unit (26) each comprises a horizontal swivel axis (70) journaled on the machine frame (12) and positioned transverse to the direction of driving (18), with cantilever arms (80, 82) for the running gear (52) or for the packer unit (26) arranged on the swivel axis (70), wherein the constructional unit comprising swivel axis (70) and cantilever arms (80, 82) is in itself formed to be rigid.

6. The machine as recited in claim 5 wherein the first and second operating positions of the machine (10) are each assigned the lockable stop positions (E1, E2) of the pivoting range of the swivel axis (70) with the cantilever arms (80, 82) for the running gear (52) and the packer unit (26) arranged thereon.

7. The machine as recited in claims 1 to 6 wherein the combined functional unit or module (60) comprising the running gear (52) and the packer unit (26) is arranged approximately in the middle of the implement (10) in a transverse direction, and wherein the running gear (52) serves for transport purposes in a first operating position.

8. A method for the conversion and/or functional change of a towed agricultural machine 10) as recited in claim 1, the conversion and/or functional change being effected between a first operating mode for tilling and/or for sowing seeds and a second operating mode for road traffic, wherein the machine (10) comprises a machine frame (12) and tillage tools (14) arranged thereon and further a packer unit (26) arranged subsequent to the tillage tools (14) in the driving direction (18) of the machine (10), the packer unit (26) being hinged pivotally and height adjustably on the machine frame (12) and the packer unit (26) being assigned a running gear (52) comprising at least two rear support wheels (54), which are arranged in the area of the rear end of the machine (10), wherein the packer unit (26) is pivotally and height adjustably journaled on the machine frame (12) and comprises a module (60) with a running gear (52) and/or rear support wheels (54) as well as packer tools (66) arranged thereon, which module (60) is journaled to be pivotal between two stop positions (E1, E2), wherein either the running gear (52) or the packer tools (66) face toward the ground and/or are in engagement or in contact with the ground in the respective stop positions (E1, E2), and wherein the packer unit (26) together with the module (60) journaled thereon are height adjustable and/or pivotal in relation to the machine frame (12) by means of a first adjustment device (30), and wherein the module (60) is switchable between its two stop positions (E1, E2) for driving on the road and for driving on the field by means of at least one second adjustment device (68), wherein an adjustment or a pivoting movement of the module (60) arranged pivotally on the packer frame (28) around an approximately horizontally positioned swivel axis (70) defines the stop positions (E1, E2) of said module (60), and wherein the stop positions (E1, E2) are controllable by means of adjustment movements of the second adjustment device (68) that is hinged onto the packer frame (28).

9. The method as recited in claim 8 wherein the at least one first adjustment device (30) lowers or lifts the packer unit (26) as a whole, said packer unit (26) being hinged on the frame (12) and movable about an approximately horizontal swivel axis.

10. The method as recited in claim 8 or 9 wherein, in a first operating position, the running gear (52) and/or the rear support wheels (54) arranged at the rear end of the machine (10) are brought into an active position for road traffic and the packer unit (26) is brought outside the engagement range with the ground, and wherein, in a second operating position, the running gear (52), or at least parts of the running gear (52), are brought into an inactive position out of contact range with the ground and the packer unit (26) is in an active mode in engagement with the ground.

11. The method as recited in one of the claims 8 to 10 wherein, in a first operating position, the running gear (52) and/or the rear support wheels (54) arranged at the rear end of the machine (10) are brought into an active position for road traffic and the packer tools (66) are brought outside the engagement range with the ground, and wherein, in a second operating position, the running gear (52), or at least parts of the running gear (52), are brought into an inactive position out of contact range with the ground and the packer tools (66) are in an active mode in engagement with the ground.

## Revendications

1. Machine agricole tractée (10) destinée à travailler le sol et/ou à épandre les semences, avec un châssis de machine (12) et des outils de travail de sol (14) y disposés, avec une unité de rouleau plombeur (26) qui est disposée, dans le sens de marche (18) de la machine (10), en aval des outils de travail de sol (14), est articulée sur le châssis de machine (12) de manière à être mobile à pivotement et réglable en hauteur et à laquelle est associé un mécanisme de roulement (52) qui comprend au moins deux roues supports (54) arrière disposées dans une zone arrière de ladite machine (10), dans laquelle ladite unité de rouleau plombeur (26) qui est logée sur le châssis de machine (12) de manière à être mobile à pivotement et réglable en hauteur présente un module (60) qui est logé par rapport à celle-ci de manière à être mobile à pivotement entre deux positions extrêmes (E1, E2) et qui a un mécanisme de roulement (52) et/ou des roues supports (54) arrière ainsi que des outils de rouleau plombeur (66) disposés sur lui, dans les positions extrêmes (E1, E2) respectives, ledit mécanisme de roulement (52) ou lesdits outils de rouleau plombeur (66) montrant vers le sol et/ou se trouvant en prise ou en contact avec le sol, et dans laquelle des dispositifs de réglage (30, 68) respectivement séparés sont associés à ladite unité de rouleau plombeur (26) et au module (60) y logé afin de pouvoir commander indépendamment l'un de l'autre le réglage et/ou la mobilité à pivotement de ladite unité de rouleau plombeur (26) ainsi que du module (60) y logé, **caractérisée par le fait que** ledit module (60) comprend un châssis de module (72) qui est disposé sur le châssis de rouleau plombeur (28) de manière à être mobile à pivotement et sur lequel sont suspendus ou bien logés les outils de rouleau plombeur (66) et le mécanisme de roulement (52) et/ou lesdites roues supports (54) arrière.

2. Machine selon la revendication 1, dans laquelle ladite unité de rouleau plombeur (26) articulée sur le châssis de machine (12) comprend un châssis de rouleau plombeur (28) mobile à pivotement et réglable en hauteur qui est couplé au châssis de machine (12) par au moins un premier dispositif de réglage (30).

3. Machine selon la revendication 2, dans laquelle ledit au moins un premier dispositif de réglage (30) fait descendre ou monter comme un tout ladite unité de rouleau plombeur (26) articulée sur le châssis (12) et mobile sur un axe de pivotement à peu près horizontal.

4. Machine selon l'une quelconque des revendications 1 à 3, dans laquelle lesdites positions extrêmes (E1, E2) du module (60) disposé sur le châssis de rouleau plombeur (28) de manière à être mobile à pivotement sont définies par un pivotement sur un axe de pivotement situé à près horizontalement, les positions extrêmes (E1, E2) pouvant être commandées par des mouvements de réglage d'au moins un deuxième dispositif de réglage (68) articulé sur ledit châssis de rouleau plombeur (28).

5. Machine selon l'une quelconque des revendications 1 à 4, dans laquelle l'unité fonctionnelle combinée se composant du mécanisme de roulement (52) et de ladite unité de rouleau plombeur (26) présente respectivement un axe de pivotement (70) horizontal logé sur le châssis de machine (12) et dirigé transversalement au sens de marche (18) ainsi que des bras en saillie (80, 82) y disposés pour le mécanisme de roulement (52) ou bien ladite unité de rouleau plombeur (26), l'ensemble constructif se composant de l'axe de pivotement (70) et des bras en saillie (80, 82) étant réalisé de manière rigide en lui-même.

6. Machine selon la revendication 5, dans laquelle aux première et deuxième positions de fonctionnement de la machine (10) sont associées respectivement les positions extrêmes (E1, E2) aptes à être verrouillées, de la zone de pivotement de l'axe de pivotement (70) avec les bras en saillie (80, 82) y disposés pour le mécanisme de roulement (52) et ladite unité de rouleau plombeur (26).

7. Machine selon l'une quelconque des revendications 1 à 6, dans laquelle l'unité fonctionnelle combinée ou bien le module (60) se composant dudit mécanisme de roulement (52) et de ladite unité de rouleau plombeur (26) est disposé(e), dans la direction transversale, à peu près au milieu de l'appareil (10) et ledit mécanisme de roulement (52) sert, dans la première position de fonctionnement, à des fins de transport.

8. Procédé pour adapter l'équipement et/ou modifier la fonction d'une machine agricole tractée (10) selon la revendication 1, entre un premier mode de fonctionnement pour travailler le sol et/ou pour épandre les semences et un deuxième mode de fonctionnement pour rouler sur la route, ladite machine (10) comprenant un châssis de machine (12) avec des outils de travail de sol (14) y disposés ainsi qu'une unité de rouleau plombeur (26) qui est disposée, dans le sens de marche (18) de la machine (10), en aval des outils de travail de sol (14) et est articulée sur le châssis de machine (12) de manière à être mobile à pivotement et réglable en hauteur, à ladite unité de rouleau plombeur (26) étant associé un mécanisme de roulement (52) qui comprend au moins deux roues supports (54) arrière disposées dans une zone arrière de ladite machine (10), ladite unité de rouleau plombeur (26) étant logée sur le châssis de machine (12) de manière à être mobile à pivotement et réglable en hauteur et présentant un module (60) logé à pivotement entre deux positions extrêmes (E1, E2) et ayant un mécanisme de roulement (52) et/ou des roues supports (54) arrière ainsi que des outils de rouleau plombeur (66), dans les positions extrêmes (E1, E2) respectives, ledit mécanisme de roulement (52) ou lesdits outils de rouleau plombeur (66) montrant vers le sol et/ou se trouvant en prise ou en contact avec le sol, et ladite unité de rouleau plombeur (26) conjointement avec le module (60) y logé étant réglable en hauteur et/ou mobile à pivotement par rapport au châssis de machine (12) au moyen d'un premier dispositif de réglage (30), dans lequel on peut faire changer ledit module (60) au moyen d'au moins un deuxième dispositif de réglage (68) entre ses deux positions extrêmes (E1, E2) pour rouler sur la route ou pour rouler dans le champs, les positions extrêmes (E1, E2) du module (60) disposé sur le châssis de rouleau plombeur (28) de manière à être mobile à pivotement sont définies par un réglage ou un pivotement de celui-ci sur un axe de pivotement (70) situé à près horizontalement, et lesdites positions extrêmes (E1, E2) pouvant être commandées par des mouvements de réglage dudit deuxième dispositif de réglage (68) articulé sur le châssis de rouleau plombeur (28).

9. Procédé selon la revendication 8, dans lequel ledit au moins un premier dispositif de réglage (30) fait descendre ou monter comme un tout ladite unité de rouleau plombeur (26) articulée sur le châssis (12) et mobile sur un axe de pivotement à peu près horizontal.

10. Procédé selon la revendication 8 ou 9, dans lequel, dans une première position de fonctionnement, ledit mécanisme de roulement (52) et/ou les roues supports (54) arrière disposées côté arrière est/sont mis(es) dans une position active pour rouler sur la route et ladite unité de rouleau plombeur (26) est mise hors d'une zone de prise avec le sol, et dans lequel, dans une deuxième position de fonctionnement, au moins des parties du mécanisme de roulement (52) sont mises dans une position inactive hors d'une zone de contact avec le sol et ladite unité de rouleau plombeur (26) se trouve dans un état actif dans la zone de prise avec le sol.

11. Procédé selon l'une quelconque des revendications 8 à 10, dans lequel, dans une première position de fonctionnement, ledit mécanisme de roulement (52) et/ou les roues supports (54) arrière disposées côté arrière est/sont mis(es) dans une position active pour rouler sur la route et lesdits outils de rouleau plombeur (66) sont mis hors d'une zone de prise avec le sol, et dans lequel, dans une deuxième position de fonctionnement, au moins des parties du mécanisme de roulement (52) sont mises dans une position inactive hors d'une zone de contact avec le sol et lesdits outils de rouleau plombeur (66) se trouvent dans un état actif dans la zone de prise avec le sol.
